# EUROPEAN PATENT APPLICATION

(11) **EP 4 851 830 A1**
(43) Date of publication of application: **09.12.2026**
(21) Application number: 25893804.2
(22) Date of filing: 09.10.2025
(51) Int. Cl.: G06F 16/957

(54) **USER INTERFACE RENDERING METHOD AND APPARATUS, DEVICE, STORAGE MEDIUM, AND PROGRAM PRODUCT**

(30) Priority: 25.11.2024 CN 202411701820
(71) Applicant: Tencent Technology (Shenzhen) Company Limited, Shenzhen, Guangdong 518057 (CN)
(72) Inventor: DUAN, Yufei, Shenzhen, Guangdong 518057 (CN); GUAN, Yujian, Shenzhen, Guangdong 518057 (CN); FENG, Jian, Shenzhen, Guangdong 518057 (CN); LU, Zhengkun, Shenzhen, Guangdong 518057 (CN)
(74) Representative: Gunzelmann, Rainer
(86) International application number: PCT/CN2025/126417
(87) International publication number: WO 2026/108421

(57) **Abstract**

A user interface rendering method and apparatus, a device, a storage medium, and a program product, relating to the field of human-computer interaction. The method comprises: displaying a first user interface of an application program, wherein the first user interface is created and rendered by means of a browser framework deployed in the application program, and the first user interface comprises a first interface element acquired by means of a web page address; receiving an interface jump operation, wherein the interface jump operation triggers jumping from the currently displayed first user interface to a second user interface of the application program so as to display a second interface element; and in response to the interface jump operation, creating and rendering the second user interface of the application program by means of a native framework of the application program, wherein the second user interface comprises the second interface element dynamically acquired by the browser framework by means of the web page address.

## Description

### RELATED APPLICATION

This application claims priority to Chinese Patent Application No. 2024117018203, filed with the China National Intellectual Property Administration on November 25, 2024 and entitled "BROWSING INTERFACE CONTROL METHOD AND APPARATUS, DEVICE, STORAGE MEDIUM, AND PROGRAM PRODUCT", which is incorporated by reference in its entirety.

### FIELD OF THE TECHNOLOGY

Embodiments of this disclosure relate to the field of human-computer interaction, including a user interface rendering method and apparatus, a device, a storage medium, and a program product.

### BACKGROUND OF THE DISCLOSURE

With the development of computer technologies, applications installed on terminals are widely developed, and various applications such as a video application, a shopping application, a game application, and a reading application provide rich and interesting content for users.

In a related technology, to provide a degree of cross-platform flexibility to present richer content while providing higher terminal performance and better user experience, a hybrid application is developed based on a native framework in combination with a browser framework. The hybrid application implements dynamic content rendering by using browser-based container (e.g. a WebView container) in combination with a native capability, which can balance performance and a cross-platform requirement while optimizing user experience through pre-compilation and hardware acceleration.

### SUMMARY

Embodiments of this disclosure provide a user interface rendering method and apparatus, a device, a storage medium, and a program product, which can render, on a native interface, a second interface element obtained based on an interface jump operation based on a webpage address, have advantages of both native interface display stability and interface element display timeliness, and help provide a good feedback to a user more efficiently. One or more technical solutions are as follows.

According to one aspect, a user interface rendering method is provided. The method includes:
displaying a first user interface of an application, the first user interface being rendered through a browser framework deployed within the application, and the first user interface including a first interface element obtained based on a webpage address;
receiving an interface jump operation, the interface jump operation triggering jumping from the first user interface to a second user interface of the application to display a second interface element; and
creating and rendering the second user interface through a native framework of the application based on the interface jump operation, the second user interface including the second interface element dynamically obtained through the browser framework based on the webpage address.

According to another aspect, a user interface rendering apparatus is provided. The apparatus includes:
a first rendering module, configured to display a first user interface of an application, the first user interface being rendered through a browser framework deployed within the application, and the first user interface including a first interface element obtained based on a webpage address;
a receiving module, configured to receive an interface jump operation, the interface jump operation triggering jumping from the first user interface to a second user interface of the application; and
a second rendering module, configured to create and render the second user interface through a native framework of the application based on the interface jump operation, the second user interface including a second interface element obtained through the browser framework based on the webpage address.

According to another aspect, a computer device is provided, including a processor (an example of processing circuitry) and a memory, the memory having at least one instruction, at least one segment of program, a code set, or an instruction set stored therein, and the at least one instruction, the at least one segment of program, the code set, or the instruction set being loaded and executed by the processor to implement the user interface rendering method according to any one of the foregoing embodiments of this disclosure.

According to another aspect, a computer-readable storage medium is provided, the computer-readable storage medium (e.g., non-transitory computer-readable storage medium) storing at least one instruction, at least one segment of program, a code set, or an instruction set, and the at least one instruction, the at least one segment of program, the code set, or the instruction set being loaded and executed by a processor to implement the user interface rendering method according to any one of the foregoing embodiments of this disclosure.

According to another aspect, a computer program product or a computer program is provided, the computer program product or the computer program including computer instructions, and the computer instructions being stored in a computer-readable storage medium. A processor of a computer device reads the computer instructions from the computer-readable storage medium and executes the computer instructions, to enable the computer device to perform the user interface rendering method according to any one of the foregoing embodiments.

### BRIEF DESCRIPTION OF THE DRAWINGS

To describe technical solutions in one or more embodiments of this disclosure, the following briefly introduces the accompanying drawings for describing the embodiments in this disclosure. The accompanying drawings in the following description show only some embodiments of this disclosure, and other drawings can be derived from these accompanying drawings.
FIG. 1 is a structural block diagram of a control system according to some embodiments of this disclosure.
FIG. 2 is a flowchart of a user interface rendering method according to some embodiments of this disclosure.
FIG. 3 is a flowchart of a user interface rendering method according to some other embodiments of this disclosure.
FIG. 4 is a schematic interface diagram of a browser interface according to some embodiments of this disclosure.
FIG. 5 is a schematic interface diagram of a native interface according to some embodiments of this disclosure.
FIG. 6 is a schematic interaction diagram of rendering a second interface element according to some embodiments of this disclosure.
FIG. 7 is a schematic interface diagram for displaying another interface element according to some embodiments of this disclosure.
FIG. 8 is a method flowchart of a user interface rendering method according to some other embodiments of this disclosure.
FIG. 9 is a schematic interaction diagram of constructing a render tree according to some embodiments of this disclosure.
FIG. 10 is a schematic diagram of a render tree according to some embodiments of this disclosure.
FIG. 11 is a method flowchart of a user interface rendering method according to some other embodiments of this disclosure.
FIG. 12 is a schematic diagram of property information comparison according to some embodiments of this disclosure.
FIG. 13 is a flowchart of obtaining and transmitting an instruction sequence according to some embodiments of this disclosure.
FIG. 14 is a flowchart of a user interface rendering method according to some other embodiments of this disclosure.
FIG. 15 is a schematic diagram of execution based on an event dispatcher and an event detector according to some embodiments of this disclosure.
FIG. 16 is an interaction flowchart of responding to a tap event according to some embodiments of this disclosure.
FIG. 17 is a schematic diagram of refreshing a native component according to some embodiments of this disclosure.
FIG. 18 is a schematic diagram of an overall architecture based on a user interface rendering method according to some embodiments of this disclosure.
FIG. 19 is a structural block diagram of a user interface rendering apparatus according to some embodiments of this disclosure.
FIG. 20 is a structural block diagram of a terminal according to some embodiments of this disclosure.

### DESCRIPTION OF EMBODIMENTS

To make objectives, technical solutions, and advantages of this disclosure clearer, the following describes implementations of this disclosure in further detail with reference to the accompanying drawings.

In a related technology, to provide a degree of cross-platform flexibility to present richer content while providing higher terminal performance and better user experience, a hybrid application may be developed based on a native framework in combination with a browser framework. However, the native framework and the browser framework may run in independent environments respectively, which is not conducive to realizing a smooth interface switching process within the application, thereby affecting the user experience of the application.

In embodiments of this disclosure, a user interface rendering method is described, and can render, on a native interface, a second interface element obtained based on an interface jump operation based on a webpage address, have advantages of both native interface display stability and interface element display timeliness, and help provide feedback to a user more efficiently. The obtaining of the second interface element through a webpage address mentioned in one or more embodiments of this disclosure is not limited to a manner of directly requesting the second interface element in real time through a webpage address, but also includes other non-real-time obtaining manners such as a preloading strategy, thereby helping ensure the timeliness of obtaining the second interface element. The user interface rendering method included in one or more embodiments of this disclosure may be applied to various application-related scenarios that simultaneously support native architecture technology and web technology, such as mobile application usage scenarios, desktop application usage scenarios, application development scenarios, data visualization scenarios and educational training scenarios, which are not limited thereto.

In this disclosure, a notification interface or a pop-up window can be displayed, or voice notification information can be outputted before collecting user-related data and when collecting user-related data. The notification interface, the pop-up window, or the voice notification information is usable to notify the user that user-related data is currently being collected. In this way, in this application, related operations of obtaining the user-related data only start to be executed after obtaining a confirmation operation of the user on the prompt interface or the pop-up window. Otherwise (that is, the confirmation operation of the user on the prompt interface or the pop-up window is not obtained), the related operations of obtaining the user-related data are ended, that is, the user-related data is not obtained. In other words, in this disclosure, all collected user data is collected with the consent and authorization of users. The collection, use, and processing of relevant user data need to comply with the relevant laws, regulations, and standards of relevant regions.

The following describes some terms involved in one or more embodiments of this disclosure. The descriptions of the terms are provided as examples only and are not intended to limit the scope of the disclosure

Browser framework: A browser framework may also be referred to as a browser component in this disclosure, which may correspond to a non-native program framework embedded in an application and configured to extend or replace a native browser functionality. Such a framework may be integrated into a host program in a component form, provide an independent rendering engine and Web functionality support, and form a technical complement or alternative relationship with a native framework.

Native framework: A native framework may correspond to a UI development tool set bound to a specific operating system, which directly invokes system underlying APIs to implement interface rendering and interaction functions.

Browser interface: A browser interface may correspond to an interface created and rendered by a browser framework deployed in an application.

Native interface: A Native interface may correspond to an interface created based on a native framework of an application.

Interface element: An interface element may also be referred to as a webpage interface element, which may correspond to a basic unit constituting a user interface and may be configured to implement information display, interaction operations and visual presentation. Interface elements may include various types, for example, basic content elements (for example, text, images, and hyperlinks), interactive function elements (for example, forms, buttons, and navigation bars), multimedia and dynamic elements (for example, video/audio and animations), and layout and structure elements (for example, tables).

Atomic component: An atomic component may correspond to the smallest UI unit based on an atomic design concept and has indivisible properties, independent functions and standardized interfaces, such as basic elements like buttons and input boxes.

Native component: A native component may correspond to an underlying component directly rendered by a client (such as an operating system or a mini-program framework), such as a text box, a video player, and the like., which has platform-specific performance advantages.

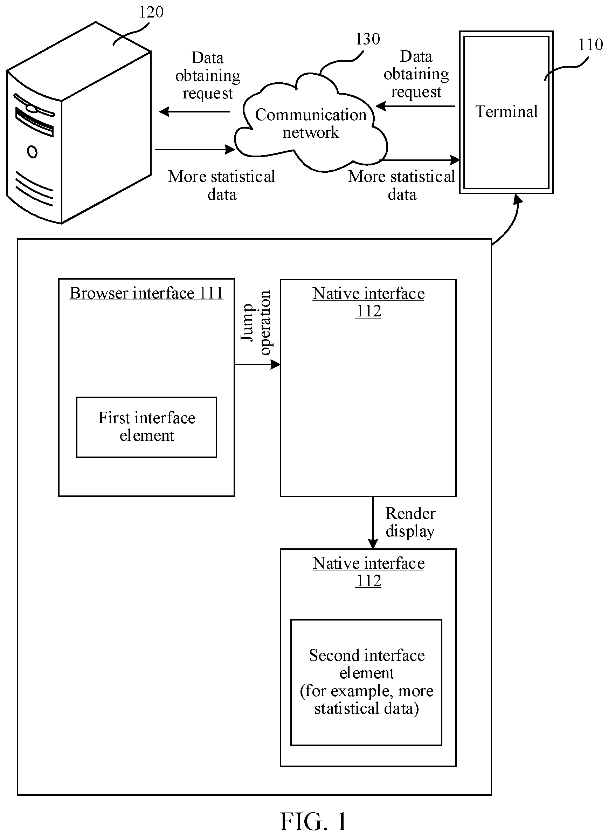

The following describes technical solutions in embodiments of this disclosure with reference to accompanying drawings. The described embodiments are some embodiments of this disclosure. Other embodiments are within the scope of this disclosure. In the following descriptions, related "some embodiments" describe a subset of all possible embodiments. However, it may be understood that the "some embodiments" may be the same subset or different subsets of all the possible embodiments, and may be combined with each other without conflict. The following describes a system architecture involved in one or more embodiments of this disclosure. The user interface rendering method included in one or more embodiments of this disclosure is implemented by a terminal and a server through data interaction. For example, referring to FIG. 1, the system involves a terminal 110 and a server 120. The terminal 110 and the server 120 are communicatively connected via a communication network 130.

An application is installed on the terminal 110. The application supports not only native technologies but also webpage technologies, and the application may also be referred to as a hybrid application.

For example, the application may not only adopt a native framework corresponding to the native technologies to construct and render a native interface of the application, but also support webpage technologies by means of a built-in browser framework method, construct and render a browser interface when running the application, and may also load and display webpage content when needed.

The terminal 110 displays a browser interface 111.

Taking a case that the terminal 110 displays the browser interface 111 (which may also be referred to as a first user interface) at a specific moment as an example, the browser interface 111 is an interface created and rendered by a browser framework deployed in the application. The browser interface 111 displays a first interface element, and the first interface element is obtained through a webpage address corresponding to a webpage link (or referred to as a webpage address for short).

For example, the webpage link is configured to indicate a website developed by a data management platform, the webpage address is address information specifically indicating the website, and the first interface element included in the browser interface 111 is partial statistical data collected by the data management platform within a historical time period.

An interface jump operation (which may also be referred to as an interface jump trigger operation) configured to trigger the displaying of a second interface element is received. In response to the interface jump operation, a native interface (which may also be referred to as a second user interface) of the application is created.

The interface jump operation triggers the displaying of the second interface element, that is, the transition from the currently displayed browser interface (the first user interface) to the native interface (the second user interface). The second user interface includes the second interface element dynamically obtained through the webpage address.

For example, the browser interface 111 provides a control for jumping to another interface or jumping to display another window, and a trigger operation directed at the control is taken as the interface jump operation. For example, in addition to displaying the partial statistical data collected by the data management platform within the historical time period, the browser interface 111 further displays a data expansion control, the data expansion control is configured to expand and display more statistical data, and a trigger operation directed at the data expansion control is taken as the interface jump operation.

The native interface 112 is an interface created based on the native framework of the application. For example, in response to the interface jump operation, the application installed on the terminal 110 invokes the native framework to create the native interface 112, and the native interface 112 is created based on the native framework of the application itself, which has higher performance and smoothness.

The second interface element may be obtained in real time, for example, triggered by the interface jump operation to dynamically obtain the second interface element through the webpage address. For example, the trigger operation directed at the data expansion control is taken as the interface jump operation, and more statistical data is expanded and displayed through the interface jump operation. Alternatively, the second interface element may also be obtained non-real-time, for instance, may be preloaded, thereby helping ensure the timeliness of obtaining the second interface element.

After the element interface is created, the second interface element is rendered and displayed in the native interface.

For example, the native interface 112 is regarded as a container created based on the native framework, and based on the interface jump operation, the terminal 110 (or the application installed on the terminal 110) transmits a data acquisition request to the server 120 through the communication network 130. The data acquisition request is configured to request obtaining at least one interface element corresponding to the interface jump operation as the second interface element in the container. After the server 120 has queried the second interface element, the server 120 feeds back the second interface element to the terminal 110 (or the application installed on the terminal 110) through the communication network 130, so that the second interface element corresponding to the interface jump operation is displayed in the native interface 112 of the application. The second interface element may be different from the first interface element, or there may be partially overlapping interface elements, which is not limited thereto.

For example: the interface jump operation indicates that more statistical data is to be displayed on the basis of displaying the partial statistical data (the first interface element) counted by the data management platform, the application installed on the terminal 110 transmits a data acquisition request to the server 120 corresponding to the data management platform (such as a backend server of the data management platform) through the communication network 130 based on the interface jump operation, so that the server 120 obtains more statistical data through the webpage address, and then the server 120 transmits the obtained statistical data as the second interface element to the application installed on the terminal 110, and the terminal 110 renders the second interface element into the native interface 112, so as to display the second interface element in the native interface 112.

It is worth noting that the above-mentioned terminal includes but is not limited to mobile terminals such as mobile phones, tablet computers, portable laptop computers, intelligent voice interaction devices, intelligent home appliances, and vehicle-mounted terminals, and may also be implemented as a desktop computer, and the like. The above-mentioned server may be an independent physical server, or a server cluster or a distributed system composed of a plurality of physical servers, or a cloud server.

In the solution included in one or more embodiments of this disclosure, in a case that the first user interface is displayed, in response to receiving the interface jump operation, a native interface is created and a second interface element dynamically obtained through a webpage address corresponding to the first user interface is displayed in the native interface. Even if the first user interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing a more efficient good feedback to the user on the premise of helping ensure a smooth interface transition effect.

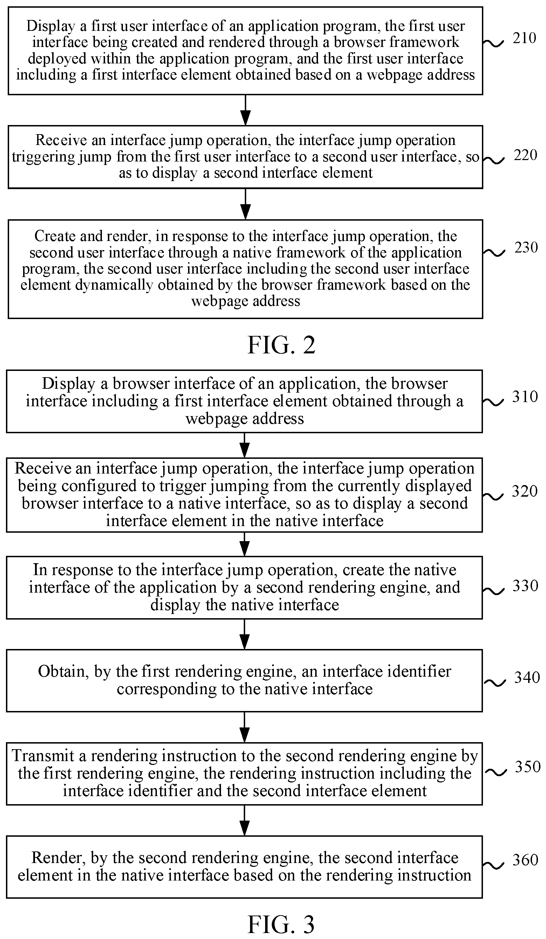

The user interface rendering method provided by this disclosure is described with reference to the above-mentioned term introduction and application scenarios, taking the method being applied to a terminal as an example for description. As shown in FIG. 2, the method includes the following operations 210 to 230.

Operation 210: Display a first user interface of an application, the first user interface being rendered through a browser framework deployed within the application, and the first user interface including a first interface element obtained based on a webpage address. For example, a first user interface of an application is displayed, the first user interface being created and rendered through a browser framework deployed within the application, and the first user interface including a first interface element obtained based on a webpage address.

For example, the application is a software application installed in a device such as a mobile terminal or a television, and the first user interface, which may also be referred to as a browser interface, is a browser view embedded in the application. In the process of the device running the application, the user of the application does not need to additionally open an external web browser, that is, may load and browse webpages through the browser interface in the process of using the application, so as to obtain instant information. The browser interface may be displayed on a device screen through a Graphical User Interface (GUI) of the application, and the browser interface may also be referred to as a WebView interface.

The first interface element is obtained through a webpage address corresponding to a webpage link. The first interface element is implemented as at least one interface element among a plurality of interface elements developed for the webpage address.

For example, the webpage link is link information indicated by the currently displayed browser interface and is configured to uniquely indicate a webpage address of a webpage, such as the webpage address corresponding to webpage A being "https://www.exampledatahub.com" (this webpage address is a virtual that is not intended to be accessed, and is an illustrative example here). The webpage address may be represented as a Uniform Resource Locator (URL), each webpage has a unique URL, and the webpage indicated by the webpage address has a large amount of data, and the first interface element is displayed in the current browser interface. When the first interface element is obtained from the webpage address, partial data or all data is selected from the large amount of data included in the webpage indicated by the webpage address as the first interface element, and the first interface element is rendered and displayed on the browser interface.

For example: the webpage address indicated by the webpage link indicates a data management platform, the data management platform collects a large amount of statistical data, and the first interface element in the browser interface displayed at the current moment is partial statistical data therein.

The browser interface is a user interface presented through the browser framework, and therefore the browser interface is an interface displayed when the application is in a network connection state, and the first interface element is obtained and displayed through the webpage address corresponding to the webpage link when the application is in the network connection state.

For example, the application being in the network connection state means that the current application is capable of implementing a data interaction process with the webpage corresponding to the webpage link through the Internet, such as obtaining the first interface element from the webpage address corresponding to the webpage link.

When the application is in the network connection state, the browser component (for example, a WebView component) built in the application is capable of rendering and displaying the browser interface (including the first interface element) based on the data obtained from the webpage address. Conversely, when the application is in a network disconnection state, that is, the application cannot implement the data interaction process with the webpage address corresponding to the webpage link through the Internet, the application cannot obtain the first interface element from the webpage address through the browser component, and cannot render and display the first interface element in the browser interface, and the like.

The browser interface is an interface created and displayed by the browser framework deployed in the application.

For example, in order to provide more instant information in the application, a browser framework may be integrated in the application, the browser framework allows a developer to embed and process webpage content in the application, and the browser framework may implement multiple functions such as webpage loading, parsing, rendering, and interaction through a plurality of integrated components, which facilitates obtaining more instant information.

For example, the plurality of components in the browser framework include a first rendering engine, and the first rendering engine is configured to represent a rendering engine in the browser framework for rendering interface elements. The browser framework creates and displays the browser interface in the application by invoking the first rendering engine.

That is, the application is independent software having a specific function, and the browser interface is an interface in the application for accessing various webpage addresses on the Internet, such as entering a webpage through inputting a webpage link to enter a webpage address. Some applications choose to provide browser services by deploying a browser framework, so that a user may easily access instant information using web technologies on different devices and platforms, thereby providing greater flexibility and convenience.

Operation 220: Receive an interface jump operation, the interface jump operation triggering jump from the first user interface to a second user interface, so as to display a second interface element. For example, an interface jump operation is received, the interface jump operation triggering jumping from the first user interface to a second user interface of the application to display a second interface element.

For example, the interface jump operation, which may also be referred to as an interface jump trigger operation, is an operation performed with respect to the browser interface. The interface jump operation includes various operation forms such as a tap operation, a long-press operation, a slide operation, a drag operation and a voice trigger operation directed at the browser interface.

For example, taking a case that the interface jump operation may be a control trigger operation as an example, the browser interface displays a control configured to jump to another interface, and if a control trigger operation directed at the control is received, it is deemed that the interface jump operation is received. For instance, the current browser interface displays partial statistical data (which may be referred to as the first interface element), the control indicates jumping to another interface to display more statistical data (which may be referred to as the second interface element), or the control indicates jumping to another interface to display detailed information of the current statistical data, and the like (which may be referred to as the second interface element), which is not limited thereto.

For example, taking a case that the interface jump operation may be a region trigger operation as an example, the browser interface displays at least one trigger region, each trigger region being configured to jump to a different second interface to display a different second interface element. If a region trigger operation directed at a specific trigger region is received, it is deemed that the interface jump operation is received. For instance: the current browser interface displays three trigger regions, trigger region 1 indicating partial statistical data of type A, trigger region 2 indicating partial statistical data of type B, and trigger region 3 indicating partial statistical data of type C; if a region trigger operation directed at trigger region 1 is received, it means that the second interface corresponding to trigger region 1 needs to be transitioned to so as to display more statistical data of type A, and the like, which is not limited thereto.

For example, taking a case that the interface jump operation may be a specified gesture trigger operation as an example, the browser interface displays a specified trigger region, and if a specified gesture trigger operation in the specified trigger region is received, it is deemed that the interface jump operation is received. For instance: the specified trigger region displayed by the current browser interface is a highlighted region L; if a "circle drawing operation" is received in the highlighted region L, the interface jumps to another interface to display more statistical data; alternatively, if a "triangle drawing operation" is received in the highlighted region L, the interface jumps to another interface to display the detailed information of the current statistical data, and the like, which is not limited thereto.

The interface jump operation may be an operation performed with respect to the terminal on which the application is installed. For example, the interface jump operation is a pressing operation on a physical key of the terminal in a case that the browser interface is displayed; or the interface jump operation is a shaking operation on the terminal in a case that the browser interface is displayed, and the like., and the operation form of the interface jump operation is not limited thereto.

Operation 230: Create and render, in response to the interface jump operation, the second user interface through a native framework of the application, the second user interface including the second user interface element dynamically obtained through the browser framework based on the webpage address. For example, the second user interface is created and rendered, by processing circuitry, through a native framework of the application based on the interface jump operation, the second user interface including the second interface element dynamically obtained through the browser framework based on the webpage address.

For example, the interface jump operation is an operation indicating jumping from the current browser interface to display another interface (the second interface), such as jumping to display a full-screen interface; or jumping to display a half-screen interface; or jumping to display a floating window, and the like, which is not limited thereto.

The interface jump operation triggers the dynamic obtaining of the second interface element through the webpage address.

For example, the dynamic obtaining may refer to the process of obtaining the second interface element from the webpage address in real time after the interface jump operation is received, that is, after the interface jump operation is triggered, the application loads and parses the second interface element from the webpage address in real time. For instance, when the interface jump operation is received, a plurality of interface elements associated with the webpage address are determined, the plurality of interface elements are elements developed, updated and maintained for the website corresponding to the webpage address, and at least one interface element to be displayed on the interface is determined from the plurality of interface elements based on the interface jump operation as the second interface element.

The second user interface may be a native interface of the application. The native interface (Native UI) may be consistent with the user interface style of the operating system. When the terminal receives the interface jump operation, a native technology deployed in the application is adopted to construct the native interface, and the native interface is displayed on a terminal interface.

For example, the native interface is an application interface developed through a specific programming language and tools, such as: the Java language, Kotlin language, and the like for Android; and the Swift language, Objective-C language, and the like for iOS.

The native interface is an interface displayed when the application is in a running state, namely, a user interface directly rendered when the application runs, and is composed of native components of the operating system. The running state includes not only the network connection state but also the network disconnection state; that is, regardless of whether the application can connect to the Internet, the application can create and display the native interface. Local interface elements configured in the native interface during the program development process may also be displayed in the native interface, such as displaying a back control on the local interface.

The native interface is an interface created by the application invoking the native framework; that is, the native interface is a user interface directly rendered by the application invoking the native framework.

For example, the native framework is a tool set constructed based on native technologies. When the terminal receives the interface jump operation, the application invokes the native framework to construct the native interface so as to display the native interface.

Similar to the browser framework, the native framework also includes a plurality of components, such as a second rendering engine configured to implement an interface rendering process, native components configured to assist in rendering interface elements, and the like.

In order to improve application development efficiency, an open-source native framework is increasingly adopted to construct cross-platform applications, such that a developer can use the same set of code to create applications on multiple operating systems, thereby reducing development and maintenance workload.

For example, taking the open-source native framework being a cross-platform mobile application development program (RN) as an example, the process of constructing an application and constructing a native interface through React Native is briefly described.

Using the componentization concept of React, a developer can split a user interface (UI) into reusable native components, such as at least one of various forms including a button native component, a text native component, a list native component, an image native component, and the like; the native components are components in the native framework configured to assist in rendering visual interface elements (a native component is a UI module encapsulating platform-specific rendering logic). This allows a developer to use JavaScript and React.js to construct cross-platform applications in the native framework React Native. When a user interface needs to be rendered and displayed in the application, the native framework React Native constructs a native interface to implement native interface rendering.

For example, the native interface created by the native framework corresponding to the application may also be referred to as a local interface; through the creation process, the native interface is more closely integrated with the interface style and program functions that the application can express through the operating system. That is, the native interface can provide a more direct and deeper manner of integration with the operating system during the application development process, thereby facilitating the improvement of the localized experience and functions of the application through the operating system.

That is, the application may not only invoke the native framework to construct a native interface, but also create a browser interface through the deployed browser framework, so as to combine the native interface and the browser interface to execute the subsequent interface rendering process; the application may also be referred to as a hybrid application. The browser interface is created through the browser framework, and an interface rendering and display process is executed through a first rendering engine, atomic components, and the like in the browser framework. The native interface is created through the native framework, and an interface rendering and display process is executed through a second rendering engine, native components, and the like in the native framework. The browser framework and the native framework run in different environments, for example, the browser framework runs in a browser environment (WebView), and the native framework runs in a native environment (Native). Therefore, there are differences between the browser interface and the native interface in terms of technical support, environmental support, and the like.

In the native interface constructed and displayed through the native framework in response to the interface jump operation, no interface element is temporarily displayed. Therefore, the currently constructed and displayed native interface may be regarded as an interface shell. The second interface element displayed therein is dynamically obtained through the webpage address based on the interface jump operation. That is, when the interface jump is triggered, the native framework first constructs an empty shell interface (only including a basic container), and internal elements thereof (such as buttons, images) need to complete rendering through dynamically loading webpage content. This design realizes decoupling of the interface structure and the content, thereby improving loading efficiency.

In response to receiving the interface jump operation, the browser framework is invoked to obtain an interface jump instruction corresponding to the interface jump operation, and the interface jump instruction triggers the dynamic obtaining of the second interface element through the webpage address.

For example, if the browser interface receives the interface jump operation, the first interface element to which the transition operation is directed is determined from the plurality of interface elements included in the browser interface through the browser framework. The browser interface may include a plurality of interface elements (including the first interface element). One part of the interface elements are triggerable interface elements (such as some control interface elements, some image interface elements, and the like), and another part of the interface elements are non-triggerable interface elements (such as some text interface elements), and the like. The triggerable interface elements may also include interface elements that jump to other different interfaces, interface elements that return to the previous interface, and the like. Taking the first interface element being a triggerable interface element that can trigger jump to another interface as an example, if the first interface element receives the interface jump operation, the first interface element is the trigger interface element to which the interface jump operation is directed. For example, the first interface element includes interface element 1 and interface element 2, and the interface jump operation is directed at interface element 2 that can trigger jump to another interface, so interface element 2 is the trigger interface element.

Each triggerable interface element respectively corresponds to a jump instruction, and the jump instruction is configured to obtain the interface element displayed in the interface after transition; for example, triggerable interface element 1 corresponds to jump instruction m, and jump instruction m is configured to obtain statistical data of type M; triggerable interface element 2 corresponds to jump instruction n, and jump instruction n is configured to obtain statistical data of type N, and the like. If the trigger interface element that has received the interface jump operation is a triggerable interface element 1, the browser framework obtains a jump instruction m as the interface jump instruction, so as to obtain the statistical data of type M, and the like.

The webpage link indicates a webpage, and based on the interface jump operation, the browser framework is invoked to determine at least one interface element from a plurality of interface elements developed for the webpage as the second interface element. That is, when the user performs the interface jump operation, the webpage link is parsed through the browser framework, and at least one element is selected from a plurality of candidate interface elements predefined for the webpage corresponding to the webpage link as the second interface element for rendering.

For example, the second interface element includes at least one of interface elements in various forms such as a text interface element, a button interface element, an image interface element, and the like. The webpage is pre-developed with a plurality of interface elements, and interface elements may also be added, deleted, adjusted, and the like during the webpage running process based on the timely update process of the developer.

For example, the plurality of interface elements developed for the webpage are filtered based on the interface jump operation, so as to obtain therefrom at least one interface element conforming to the interface jump operation as the second interface element. Compared with the first interface element displayed in the browser interface, the second interface element may be different from the first interface element, or there may be partial content overlap.

For example, the first interface element is statistical data of type N; if a trigger operation directed at the triggerable interface element 1 in the browser interface is received as the interface jump operation, and the browser framework obtains the jump instruction m as the interface jump instruction, at least one interface element obtained from the plurality of interface elements based on jump instruction m is for obtaining the statistical data of type M, so the statistical data of type M is taken as the second interface element, and the first interface element is different from the second interface element.

Alternatively, the first interface element is partial statistical data of type M; if a trigger operation directed at triggerable interface element 1 in the browser interface is received as the interface jump operation, and the browser framework obtains jump instruction m as the interface jump instruction, all the statistical data of type M is obtained from the plurality of interface elements based on jump instruction m, so all the statistical data of type M is taken as the second interface element, and there is partial overlap between the first interface element and the second interface element, which is not limited thereto.

The second interface element is rendered and displayed in the native interface.

Considering that an interface element obtained through a webpage link by means of a browser technology has relatively high flexibility, and the manner of writing or deleting information is also relatively flexible, and the update of the information is also relatively timely. Therefore, by combining the display stability of the native interface and the advantage of the timeliness of dynamically obtaining the interface element, after the native interface is constructed, the browser framework is invoked to analyze the interface elements developed in the webpage link corresponding to the browser interface, and the second interface element that the interface jump operation indicates needs to be displayed is selected therefrom (for example, the interface jump operation indicates obtaining 100 data items of type A, and the 100 data items of type A are taken as the second interface element), so that the native framework can receive the second interface element transmitted by the browser framework.

The browser framework transmits the second interface element to the native framework. The browser framework obtains an interface jump instruction corresponding to the interface jump operation through the first rendering engine, determines the second interface element based on the interface jump instruction, and transmits the second interface element to the second rendering engine of the native framework, which is not limited thereto.

Thereafter, the native framework renders the received second interface element on the native interface, so as to display the second interface element in the native interface, thereby implementing a native rendering process based on the native framework.

For example: the webpage indicated by the webpage link corresponds to a data management platform, and the data management platform collects a large amount of statistical data, and the first interface element in the browser interface displayed previously is partial statistical data therein. If the interface jump operation indicates obtaining more statistical data, after the native framework has constructed and displayed the native interface, the native framework receives the more statistical data transmitted by the browser framework as the second interface element, so as to render the more statistical data in the native interface.

The foregoing is only an example, and this is not limited in this disclosure.

In summary, even if the browser interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing more efficient feedback to the user on the premise of helping ensure a smooth interface transition effect.

The native framework creates the native interface of the application based on the interface jump operation, and obtains an interface identifier corresponding to the native interface; the browser framework determines the interface element that the interface jump operation indicates is to be displayed in the native interface, so that the browser framework generates a rendering instruction based on the received interface identifier and the interface element, and indicates, by means of transmitting the rendering instruction to the native framework, the native framework to render the interface element into the native interface, so as to display at least one interface element in the native interface as the second interface element. For example, as shown in FIG. 3, the method included in one or more embodiments of this disclosure may also be implemented as the following operations 310 to 360.

Operation 310: Display a browser interface of an application, the browser interface including a first interface element obtained through a webpage address.

The browser interface is an interface created and displayed by a browser framework deployed in the application (which may also be referred to as a user interface, UI). The browser framework is a program framework other than a native framework embedded in the application.

For example, a browser framework is additionally embedded in the developed application, and the browser framework is configured to supplement the local application with the flexibility of web technology, so that webpage content indicated by a webpage link can be flexibly viewed during the running of the application.

The browser framework includes at least one interface setting parameter for displaying the browser interface.

For example, the browser framework provides at least one of various browser functions such as browser interface creation, browser element rendering, browser element display, and the like. The browser framework is a program framework obtained through code programming, and the code includes at least one interface setting parameter, which is a code parameter configured to implement at least one function. For example, some of the interface setting parameters are configured to control or manage browser interface creation, part of the interface setting parameters are configured to control or manage browser element rendering, part of the interface setting parameters are configured to control or manage browser element display, and the like.

The browser framework may include a plurality of components configured to implement different browser functions, and each component includes at least one interface setting parameter.

For example, the plurality of components in the browser framework include a first rendering engine; the first rendering engine in the browser framework is a core engine of the browser, which is responsible for parsing and rendering the webpage content of a webpage link, and the first rendering engine includes at least one interface setting parameter, and the browser element rendering function is implemented through the first rendering engine. For example, the first rendering engine is responsible for parsing HyperText Markup Language (HTML), Cascading Style Sheets (CSS) and a scripting programming language (JavaScript) into interface elements that the user can see and interact with.

The webpage link is a link address indicated by the currently displayed browser interface, which is configured to uniquely indicate a webpage.

The browser interface is an interface rendered and displayed by the first rendering engine built in the application, and the first rendering engine is a rendering engine in the browser framework configured to render interface elements in the browser interface. Therefore, the browser interface is more focused on expressing an interface constructed by invoking the browser framework when the application is in the network connection state, and the webpage link may be displayed in the browser interface or may not be displayed in the browser interface, which is not limited thereto.

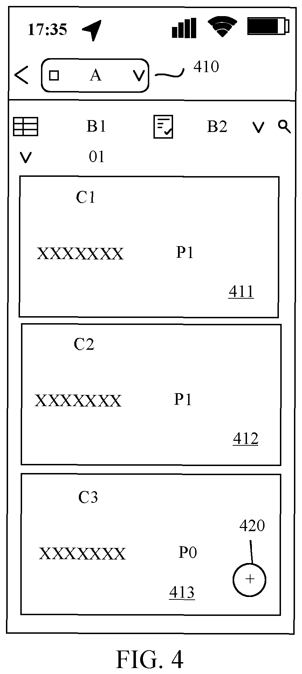

As shown in FIG. 4, an interface diagram of a displayed browser interface is illustrated, which includes a function selection list 410; the current function selection list 410 is in a collapsed style (which may also be adjusted to an expanded style), and the function item currently selected in the function selection list 410 is 'A' (for example, project management). The function item includes at least one sub-function item, for example, the sub-function items included under 'A' include 'B1' (for example, a project requirement list), 'B2' (for example, a project requirement submission form), and the like. Under 'B1', a plurality of areas (for example, requirement areas) are included, such as an area 411 corresponding to 'C1' (for example, confirmation of user requirements), an area 412 corresponding to 'C2' (for example, feasibility analysis), an area 413 corresponding to 'C3' (for example, cost accounting), and the like, and each area is configured to display relevant information, and the like.

For example, the browser interface shown in FIG. 4 corresponds to a webpage link, and the webpage link is configured to indicate a webpage; although the webpage link is not intuitively displayed in the browser interface, the information displayed in the browser interface (that is, the plurality of interface elements, including the first interface element) is a visual expression of at least one renderable interface element included in the webpage; that is, the plurality of interface elements at least include the above-mentioned function selection list 410 (for example, rendered by a list native component, a button native component, and the like in the native components), the plurality of sub-function items (for example, rendered by a text native component, and the like in the native components), the plurality of areas (for example, rendered by a text native component, a control native component, and the like in the native components), and the like, which is not limited thereto.

Operation 320: Receive an interface jump operation, the interface jump operation being configured to trigger jumping from the currently displayed browser interface to a native interface, so as to display a second interface element in the native interface.

For example, the interface jump operation is an operation performed with respect to the browser interface. The interface jump operation includes various operation forms such as a tap operation, a long-press operation, a slide operation, a drag operation and a voice trigger operation directed at the browser interface.

Operation 330: In response to the interface jump operation, create the native interface of the application by a second rendering engine, and display the native interface.

The interface jump operation triggers the dynamic obtaining of the second interface element through the webpage address, and the jump from the current browser interface to another interface.

For example, the interface jump operation is an operation to jump from the current browser interface to display another interface. The interface jump operation includes various operation forms such as a tap operation, a long-press operation, a slide operation, a drag operation and a voice trigger operation directed at the browser interface.

Taking a case that the interface jump operation is a region trigger operation as an example, as shown in FIG. 4, if a region trigger operation is performed with respect to any one of the areas C1 to C3, the detailed information corresponding to that area may be displayed. For example: if a region trigger operation directed at the C1 area 411 is received, the detailed information related to "C1" is displayed, such as displaying some additional information on the basis of retaining the content included in the display area 411 (for example, information such as "task content", "priority"); or the content included in the display area 411 (for example, information such as "task content", "priority") is cancelled from display and other additional information is displayed, and the like.

Taking a case that the interface jump operation is implemented as a control trigger operation as an example, as shown in FIG. 4, a control trigger operation is performed with respect to the add control 420 therein, so as to add a new area, and the like, which is not limited thereto.

The native interface is an interface created based on the native framework of the application. The native framework is a program framework used when developing the application.

For example, the native framework can provide a relatively unified architectural design and organizational structure for the application, thereby facilitating the repeated utilization of the native framework to implement at least one of various functions such as native interface creation, native interface element rendering, native interface element display, and the like.

The native framework includes at least one native setting parameter for displaying the native interface.

For example, the native framework may be a program framework provided by an operating system or a platform and is composed of a large amount of existing code. For example, a developer flexibly applies the existing code by writing business logic code for the running of the application so as to obtain the native framework. The native setting parameter is a code parameter configured to control or manage at least one native function. For example, some of the native setting parameters are configured to control or manage the native interface creation function, part of the native setting parameters are configured to control or manage the native interface element rendering function, part of the native setting parameters are configured to control or manage the native interface element display function, and the like.

The native framework includes a plurality of components configured to implement different native functions, and each component includes at least one native setting parameter.

For example, the plurality of components in the native framework include a second rendering engine; the second rendering engine is a rendering engine in the native framework configured to render interface elements in the native interface, and the second rendering engine includes at least one native setting parameter, and the native interface element rendering function is implemented through the second rendering engine.

If the browser interface receives the interface jump operation, invocation information is transmitted to the native framework to indicate invoking the native framework to create the native interface of the application through the second rendering engine.

In response to the interface jump operation, the native framework may be invoked to generate a native interface having a jump link relationship with the browser interface. The native interface of the application is displayed.

For example, the browser interface and the native interface have a jump link relationship therebetween, and the jump link relationship is configured to indicate that the native interface is at a next jump node of the browser interface in an interface flow.

The interface flow is configured to represent a data flow of switching between interfaces, for example, the interface flow is preset to indicate the condition of another interface displayed after jumping from any one interface; for example, the interface flow indicates that after an interface jump operation is performed on control A in interface 1, an interface element indicated by control A needs to be displayed in interface 2 displayed after the jump, and the like, and the native interface to which the browser interface jumps and displays in response to the interface jump operation is an interface that needs to display the second interface element, and the like.

In response to the interface jump operation, a full-screen interface constructed by the native framework may be displayed as the native interface.

For example, the browser interface is at least one of various forms such as a full-screen interface, a half-screen interface, and the like.

In response to the interface jump operation, a half-screen interface constructed by the native framework may be displayed as the native interface.

For example, the browser interface is at least one of various forms such as a full-screen interface, a half-screen interface, and the like. If a jump operation is received to determine the interface jump operation, a half-screen interface is constructed by the native framework as the native interface. For example, the half-screen interface may be an interface occupying half of the screen area, may also be an interface occupying more than half of the screen area, and may also be an interface occupying less than half of the screen area; that is, the area occupied by the half-screen interface is not limited.

In response to the interface jump operation, a native window constructed by the native framework may be displayed on the browser interface as the native interface.

For example, the browser interface is at least one of various forms such as a full-screen interface, a half-screen interface, and the like. If an interface jump operation is received, a native window is constructed by the native framework as the native interface. For example, the native window is in a style such as a floating window at a fixed position displayed on the browser interface, a position-changing window (a window having a position change on the browser interface), and the like, which is not limited thereto.

If a first interface jump operation is received, a full-screen interface may be constructed by the native framework as the native interface. If a second interface jump operation is received, a half-screen interface may be constructed by the native framework as the native interface. If a third interface jump operation is received, a native window may be constructed by the native framework as the native interface.

For example, the first interface jump operation, the second interface jump operation and the third interface jump operation indicate operations in different forms. For example, the first interface jump operation is a tap operation, and the second interface jump operation is a long-press operation; if different operation forms are received, the native interface in a different form is displayed; for example, if a tap operation is performed on control A in the browser interface, the native interface in the full-screen form is displayed. If a long-press operation is performed on control A in the browser interface, the native interface in the half-screen form is displayed, and the like, which is not limited thereto.

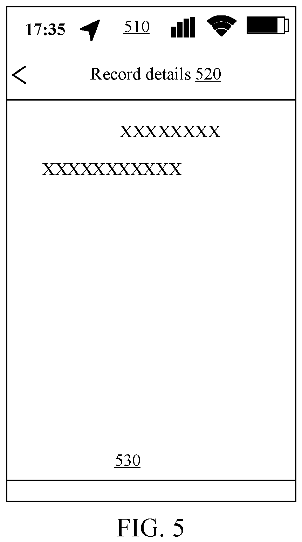

As shown in FIG. 5, description is made by taking a case that the native interface is a full-screen interface as an example. After the native interface 510 of the application is created by the native framework, the created native interface 510 is displayed on the terminal on which the application is installed. In a case that the native interface 510 has no second interface element rendered, the native interface 510 presents a blank style on a terminal interface. Alternatively, in a case that the native interface 510 has no second interface element rendered, prompt information (such as record details 520) is displayed in the terminal interface to indicate the general condition of the second interface element to be displayed, until the second interface element is displayed in the terminal interface based on a subsequent process, which is not limited thereto.

Operation 340: Obtain, by the first rendering engine, an interface identifier corresponding to the native interface.

For example, the second rendering engine is configured to generate the native interface and the interface identifier corresponding to the native interface in the native framework. In addition to rendering and displaying the native interface on the terminal interface, the second rendering engine also transmits the interface identifier to the first rendering engine, so that the first rendering engine obtains the interface identifier corresponding to the native interface.

The second rendering engine may generate the interface identifier corresponding to the native interface while creating the native interface of the application; or in response to an interface jump operation, the second rendering engine may generate the interface identifier corresponding to the native interface after creating the native interface of the application.

The interface identifier (id) is configured to uniquely indicate the native interface created by the second rendering engine based on the interface jump operation. For example, while creating the native interface, a hash value is randomly generated as the interface identifier of the native interface; or a decimal value is randomly generated as the interface identifier of the native interface, and the like, which is not limited thereto.

Operation 350: Transmit a rendering instruction to the second rendering engine by the first rendering engine, the rendering instruction including the interface identifier and the second interface element.

After obtaining the interface identifier, the first rendering engine executes a virtual rendering process; virtual rendering refers to a process of abstracting an interface rendering process into a rendering instruction; therefore, the first rendering engine is capable of generating a rendering instruction containing the interface identifier.

After the browser interface receives the interface jump operation, the first rendering engine determines, based on the interface jump operation, the second interface element that needs to be displayed in the native interface, so that the first rendering engine combines the interface element and the interface identifier to generate a rendering instruction, and transmits the rendering instruction to the second rendering engine.

Dynamic obtaining focuses on describing a process of flexibly obtaining the second interface element from a timely updated webpage based on the interface jump operation.

For example, the webpage corresponding to the webpage link is developed with a plurality of interface elements, and the interface elements are configured to be displayed on the terminal interface. In a case that the interface jump operation is received, the first rendering engine determines at least one interface element from the plurality of interface elements as the second interface element (that is, at least one interface element indicated to be rendered by the interface jump operation), then combines at least one interface element and the interface identifier to generate a rendering instruction, and transmits the rendering instruction to the second rendering engine.

A communication process may be implemented between the first rendering engine and the second rendering engine through a coding bridge (JavaScript Bridge); the JavaScript Bridge is a channel for communication between the native framework and the browser framework, and the first rendering engine may transfer the rendering instruction to the second rendering engine in the native framework through the JavaScript Bridge. In addition, the native framework may subsequently transfer a trigger event corresponding to an interface trigger operation received by the native interface to the browser framework, so that the browser framework simulates execution of a corresponding response behavior through the trigger event, which will be described in detail subsequently.

Operation 360: Render, by the second rendering engine, the second interface element in the native interface based on the rendering instruction.

For example, after receiving the rendering instruction, the second rendering engine may analyze and determine the interface identifier and the included interface element from the rendering instruction, so as to determine the native interface and the second interface element that need to be rendered through the interface identifier, thereby achieving the purpose of rendering the second interface element in the constructed native interface based on the interface jump operation.

In the process of the second rendering engine rendering the second interface element, the native component deployed in the native framework may be adopted to render the second interface element; for example: when the second interface element is a text interface element (an interface element in a text form), it is rendered by a text native component in the native components; when the second interface element is a control interface element (an interface element in a button form), it is rendered by a button native component in the native components; when the second interface element is an image interface element (an interface element in an image form), it is rendered by an image native component in the native components; and so on, so that the rendered and displayed second interface element is more adapted to the native interface itself, and the display uniformity is relatively strong.

That is, in the process of rendering the second interface element, a process of providing the second interface element based on the browser framework and rendering the second interface element through the native framework by means of a native technology is implemented, which is not limited thereto.

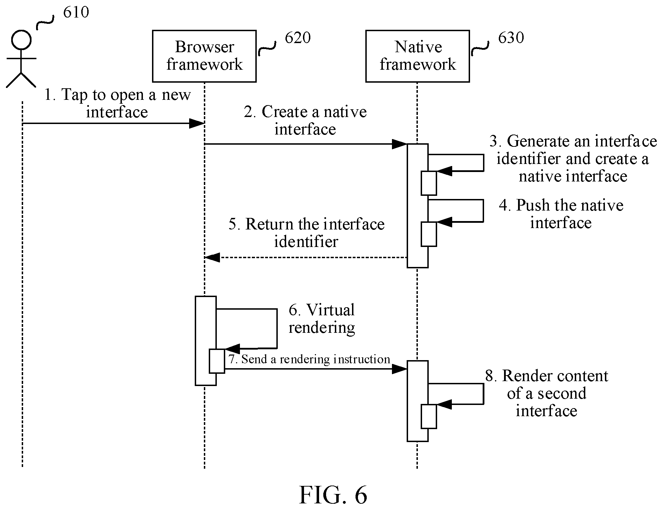

As shown in FIG. 6, description is made of the process of creating a native interface and executing interface element rendering based on the interface identifier by taking the browser framework 620 and the native framework 630 as execution subjects.

In a case that the terminal displays the browser interface, if a user 610 performs an interface jump operation (such as tapping to open a new interface) with respect to the browser interface, in a case that the interface jump operation is received, the browser framework 620 invokes the native framework 630 to create a native interface.

For example, the native framework 630 randomly creates a native interface (or referred to as a shell page: an interface having no interface element rendered and displayed) through the second rendering engine and generates an interface identifier (interface id) corresponding to the native interface, and there is a one-to-one correspondence relationship between the native interface and the interface identifier. Thereafter, the native interface is pushed out and displayed on the terminal interface, and the native framework 630 also transmits the interface identifier to the browser framework 620; for example, the native framework 630 transmits the interface identifier to the first rendering engine of the browser framework 620 through the second rendering engine.

The first rendering engine of the browser framework 620 executes a virtual rendering process based on the interface identifier and determines the interface element that the interface jump operation indicates needs to be rendered and displayed, generates a rendering instruction including the interface element and the interface identifier, and transmits the rendering instruction to the second rendering engine of the native framework 630.

Thereafter, the second rendering engine of the native framework 630 determines the native interface that needs to be rendered based on the interface identifier in the rendering instruction, and renders and displays the second interface element including at least one interface element in the native interface based on the interface element, so as to display the second interface element in the native interface of the application.

As shown in FIG. 5, the interface element is rendered on the native interface 510 based on the displayed native interface, so as to display a second interface element 530.

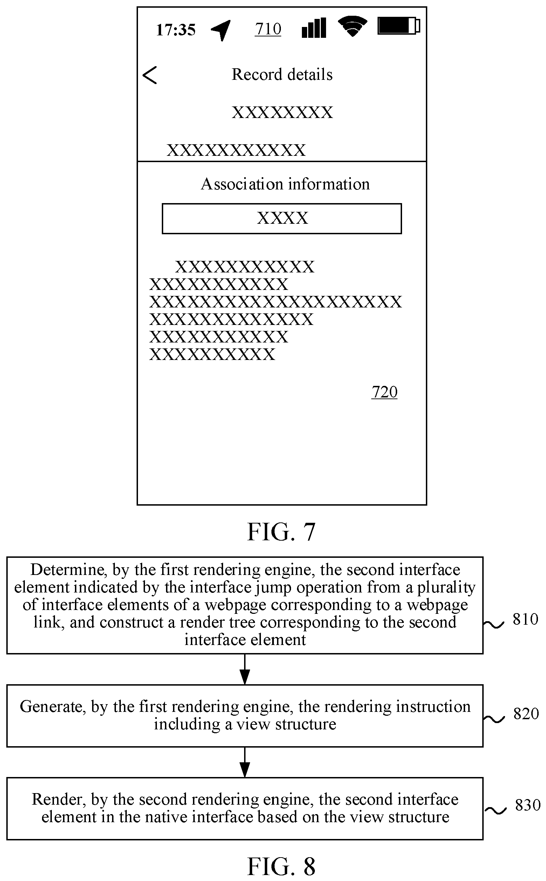

If an interface trigger operation is performed with respect to the second interface element, the browser framework may be invoked based on the interface trigger operation to analyze a trigger event corresponding to the interface trigger operation, so that an interface 710 as shown in FIG. 7 is displayed on the terminal. Another interface element 720 (being a subsequent fifth interface element) displayed based on the interface trigger operation is displayed, and the process of displaying the fifth interface element based on the interface trigger operation will be described subsequently.

The foregoing is an example, and this is not limited in this disclosure.

In summary, even if the browser interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing a more efficient good feedback to the user on the premise of helping ensure a smooth interface transition effect.

In one or more embodiments of this disclosure, it is described that the second rendering engine of the native framework transmits the interface identifier of the native interface to the first rendering engine of the browser framework, so that the second rendering engine is invoked on the native interface to render and display the second interface element based on the rendering instruction. With the aid of the interface identifier, the browser framework is facilitated to determine the second interface element to be rendered onto the native interface, so that the browser framework transmits the rendering instruction containing the second interface element and the interface identifier to the native framework, thereby causing the native framework to render the second interface element in the native interface. The accuracy of content rendering is improved in the case of interaction between the browser framework and the native framework, a more timely updated interface element is obtained with the aid of the browser framework, and the second interface element is rendered and displayed in the native interface by means of the native technology corresponding to the native framework, thereby combining the advantages of the stability of the native technology and the timeliness of the web technology, and improving the program use experience of the user.

The first rendering engine provided in the browser framework may adopt the interface elements in the webpage corresponding to the webpage link to construct a render tree, so as to guide, through the render tree, the native framework to display the second interface element in the native interface. For example, as shown in FIG. 8, operation 220 shown in the above FIG. 2 may also be implemented as the following operations 810 to 830.

Operation 810: Determine, by the first rendering engine, the second interface element indicated by the interface jump operation from a plurality of interface elements of a webpage corresponding to a webpage link, and construct a render tree corresponding to the second interface element.

For example, the webpage corresponding to the webpage link is developed with a plurality of interface elements, and the plurality of interface elements together constitute the overall layout and functions of the webpage. The plurality of interface elements include at least one of various styles such as a text interface element, an image interface element, a button interface element, a form interface element, a video interface element, and the like; the text interface element is data describing text information, the image interface element is data describing image information, the button interface element is data describing button information, the form interface element is data describing table and list information, and the video interface element is data describing video information, and the like.

The webpage is developed with a plurality of interface elements, and at least one interface element may be rendered on the terminal interface to display at least one interface element. For example: the browser interface displays partial interface elements among the plurality of interface elements. For example, the webpage is developed with 100 interface elements, and the first interface element is 25 interface elements therein, and the like.

The webpage is developed with a plurality of interface elements, and a render tree may be constructed based on hierarchical relationships in which the plurality of interface elements are displayed in the webpage. For example, by summarizing the plurality of interface elements, a render tree is jointly constructed; the render tree includes element nodes respectively corresponding to the plurality of interface elements, and the hierarchical relationships between the element nodes embody the interface hierarchical relationships of the plurality of interface elements in the webpage.

The construction of the render tree may be implemented based on the reception of the interface jump operation, and therefore, if different interface jump operations indicate displaying different interface elements, different render trees are constructed.

After the interface jump operation is received, at least one interface element indicated to be rendered by the interface jump operation (the second interface element) may be determined from the plurality of interface elements developed in the webpage, and a render tree is constructed based on hierarchical relationships of the at least one interface element, so as to obtain a render tree corresponding to the second interface element that needs to be displayed. The second interface element includes at least one interface element.

For example, after the first rendering engine obtains the plurality of interface elements developed in the webpage corresponding to the webpage link, if the browser interface receives the interface jump operation, the first rendering engine determines, from the plurality of interface elements, at least one interface element indicated to be rendered and displayed by the interface jump operation (the second interface element), and constructs a render tree based on the hierarchical relationships of the at least one interface element.

The render tree includes element nodes (that is, render nodes) corresponding to the interface elements (that is, visual interface elements); in a case that there are at least two interface elements, the hierarchical relationships between the element nodes are configured to indicate interface hierarchical relationships of the at least two interface elements.

For example, each interface element corresponds to one element node; if the render tree is configured to indicate at least one interface element (including the second interface element) that needs to be displayed on the native interface, the element nodes respectively corresponding to the at least one interface element are combined to construct the render tree, and the hierarchical relationships of the element nodes in the render tree represent the hierarchical relationships between the at least two interface elements.

An interface element may be rendered by the first rendering engine invoking an atomic component; the interface element is a visual element, and the atomic component is a componentized design concept described based on the web technology, representing a small independent UI component that can be reused (repeatedly used); for example, the text interface element may be rendered by a text atomic component, and the like.

For example, within a web-side execution environment corresponding to the browser, atomic components may be written using the React technology. In addition, atomic components may also be written using other web development technologies such as the Vue technology. The atomic component has reproducibility, encapsulation and a single function property; reproducibility means that the atomic component can be repeatedly used. Encapsulation means that the internal implementation details of the atomic component are hidden from the outside, and an interface or an Application Programming Interface (API) is exposed, for example: props, events, and the like; the single function property means that each atomic component focuses on one small function or performance, and may have a single responsibility.

For example, a plurality of types of atomic components may be deployed in one application, such as a text atomic component, a button atomic component, an image atomic component, and the like. Since the atomic components can be reused, one of each type of atomic component may be respectively deployed, and diversified interface element rendering processes are implemented by repeatedly invoking the atomic components. Alternatively, a plurality of atomic components of the same type may also be deployed, each atomic component corresponding to one interface element, thereby simplifying the condition of the render tree constructed through the interface elements.

The various atomic components and the plurality of interface elements may have a one-to-one relationship, that is, one interface element is rendered by one type of atomic component, for example, a text interface element T is rendered by a text atomic component 1; or the various atomic components and the plurality of interface elements may have a one-to-many relationship, that is, a plurality of interface elements are rendered by one type of atomic component, for example, a text interface element T1 is rendered by a text atomic component 1, and a text interface element T2 is also rendered by the text atomic component 1 (reusing the text atomic component 1), and the relationship therebetween is not limited thereto.

For example, in the React technology, atomic components are basic units of React components, and they may be created to implement a specific function or present a specific UI. For example: a button, an input box, an icon, and the like may all be regarded as atomic components. An interface element may be understood as an interface implementation condition of an atomic component, and an interface element may be described using an HTML tag, a component name, and the like. A plurality of interface elements are converted into a Document Object Model (DOM) tree when rendered.

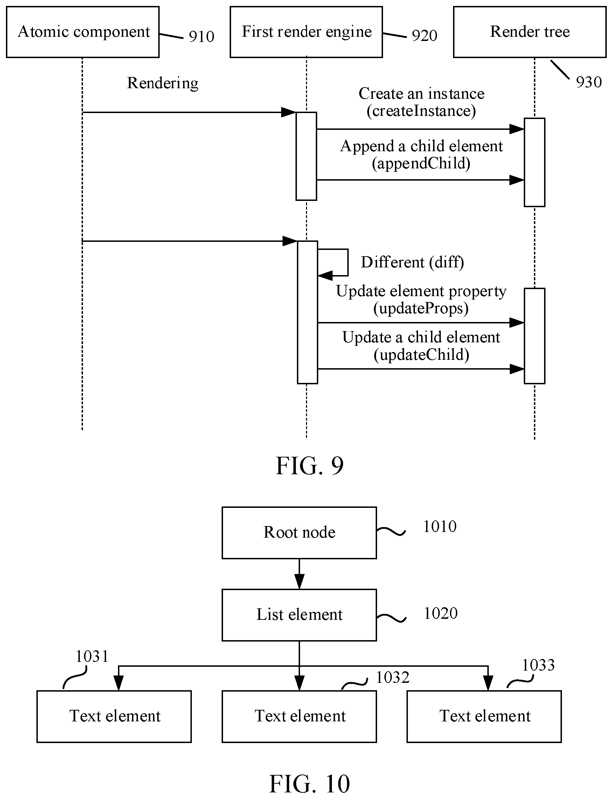

As shown in FIG. 9, an interaction flowchart for implementing construction and update of a render tree by means of the React technology is illustrated, which includes an atomic component 910 (which may also be understood as a visual interface element rendered by the atomic component, represented as a React Element), a first rendering engine 920 (a rendering engine under the web technology, represented as a Render Engine) and a render tree 930 (Virtual DOM).

Description is made by taking a case that one atomic component corresponds to one interface element as an example. When a React component renders for the first time, the first rendering engine 920 recursively parses starting from a root node, finds all the atomic components, invokes a createInstance method to create an element node of the render tree, this element node containing element property information required for its own rendering, and then uses an appendChild method to add this element node under its parent node, finally generating a complete rendering structure tree 930.

In addition, when a React component is updated, the first rendering engine 920 needs to calculate a difference for each interface element rendered by the atomic component; when it is calculated that the element property information of the interface element is updated, the updateProps method is configured to update the corresponding information to the render tree; when the child nodes of the interface element have changed (such as adding or deleting a node), the updateChild method is configured to update the child nodes of this interface element; relevant content regarding the update information corresponding to the interface element will be shown in the text below.

As shown in FIG. 10, under a root node 1010 (Root), there is a list element 1020 (ListView), and there are 3 text elements (Text) in the list element, being a text element 1031, a text element 1032 and a text element 1033, respectively. This indicates that there is a list in a page, and there are 3 lines of text in the list. A render tree in an actual application would be more complex.

For example, each element node in the render tree corresponds to one interface element. Different interface elements of the same type may be rendered correspondingly by different atomic components of the same type; for example, text atomic component 1 renders text element 1031, text atomic component 2 renders text element 1032, and text atomic component 3 renders text element 1033; or different interface elements of the same type are rendered by reusing one atomic component of the same type; for example, there exists one text atomic component that is used 3 times and is configured to render and display text element 1031, text element 1032 and text element 1033.

Operation 820: Generate, by the first rendering engine, the rendering instruction including a view structure.

The view structure includes the render tree.

For example, after the first rendering engine obtains the second interface element, it comprehensively analyzes the element distribution of the second interface element (which may include at least one interface element) when displayed, and obtains the view structure; that is: the view structure is configured to represent the distribution and display condition of the at least one interface element when rendered and displayed.

For example, the first rendering engine generates the view structure based on the render tree, and generates a rendering instruction containing the view structure, so as to transmit the same to the second rendering engine; or the first rendering engine generates a rendering instruction containing the interface identifier and the view structure, so as to transmit the same to the second rendering engine.

The first rendering engine may analyze the element property information and the hierarchical relationships corresponding to the element nodes in the render tree, and generate layout information.

The layout information indicates a layout feature of the interface elements. The view structure further includes the layout information. For example, the layout information is configured to represent an element distribution condition of the at least one interface element when rendered and displayed.

After constructing the render tree corresponding to the second interface element, the first rendering engine traverses each interface node of the render tree starting from the root node of the render tree in a specific order (for example, from top to bottom and from left to right), so as to obtain layout information corresponding to the render tree.

The first rendering engine may obtain element property information respectively corresponding to the element nodes in the render tree.

For example, in the process of obtaining the view structure through the first rendering engine, considering that each element node in the render tree respectively corresponds to one piece of element property information, the first rendering engine is configured to obtain the element property information respectively corresponding to the element nodes in the render tree, so as to obtain the layout information corresponding to the render tree by analyzing the element property information.

The element property information is configured to describe the style, layout and other rendering-related features of the interface element corresponding to the element node. The element property information includes at least one of a style property, a layout property, an effect property, an interaction property, a stacking order property, and a custom property.

For example, the style property is configured to represent a style condition of the interface element displayed in the interface, and the style property includes color (such as text color, background color, and the like), font (such as font type, font size, font weight, font style, and the like), border (such as border style, border width, border color, and the like), padding (such as internal margins between the interface element and the border, and the like), margin (such as external margins between the interface element and other interface elements), size (configured to represent the width and height of the interface element), and the like.

For example, the layout property is configured to represent a layout condition of the interface element in the interface, and the layout property includes position (such as the positioning manner of the interface element - static, absolute, relative, fixed, and the like), coordinates (such as the specific position of the interface element when displayed, may be determined by an established interface coordinate system), float (the floating state of the interface element, configured to determine the fluidity of the interface element during layout), alignment (such as text alignment, alignment of block-level elements, and the like), and the like.

For example, the effect property is configured to represent a special effect of the interface element when displayed in the interface, and the effect property includes transparency (the transparency level of the interface element), shadow effect (a property for adding a shadow to the interface element), and the like.

For example, the interaction property is configured to represent an interaction condition displayed when the interface element receives a trigger operation in the interface, and the interaction property includes a pseudo-class state (describing a style change, and the like of the interface element in different interaction states), an event processing state (representing information related to JavaScript event processing, and the like).

For example, the stacking order property is configured to represent the stacking orders of different interface elements, and is configured to determine the front and back positions of the interface elements in a three-dimensional space.

For example, the custom property is a property that the developer can add, configured to store additional information, and the like.

The above element property information is merely an illustrative example, and the scope of this disclosure is not limited thereto.

In the process of the first rendering engine obtaining the layout information, an initial interface coordinate system may be set first, for example, with the upper left corner of the terminal interface as the origin. Thereafter, the first rendering engine traverses the render tree, comprehensively analyzes the hierarchical relationships between parent elements and child elements, and emphatically analyzes the style property and the layout property in the element property information.

For example, with respect to each interface node, on the basis of considering the width and height of the parent element, the width and height of the interface element corresponding to the element node are calculated. On the basis of considering the layout of adjacent interface elements, the distribution condition of inline elements is analyzed. The absolute positioning coordinates and fixed positioning coordinates, and the like of the child element are determined based on the coordinates of the parent element, so that a region box is calculated for each interface element; the region box includes the position (identified by x, y coordinates) and size (represented by width and height) of the interface element, so as to obtain the layout information.

The first rendering engine may record the calculated layout information in the render tree, each element node having its layout information matching its element property information, and combines the layout information and the render tree to form the view structure.

The first rendering engine may combine the render tree and the layout information to obtain the view structure, and transmit the view structure to the second rendering engine in the native framework.

For example, the first rendering engine may transmit the view structure as a rendering instruction to the second rendering engine in the native framework through the JavaScript Bridge; or the first rendering engine may transmit the rendering instruction to the second rendering engine through the JavaScript Bridge after combining the view structure and the interface identifier corresponding to the native interface into the rendering instruction.

Operation 830: Render, by the second rendering engine, the second interface element in the native interface based on the view structure.

For example, after the second rendering engine obtains the view structure, since the view structure represents the overall layout and hierarchical relationships of the interface elements on the interface, a targeted rendering process may be implemented based on the view structure.

The second rendering engine may determine, from the view structure, a first atomic component in the browser framework that corresponds to render the interface element.

For example, atomic components are components that are deployed in the application and can be reused (repeatedly used) to render and display interface elements; a plurality of types of atomic components may be deployed in one application, such as a text atomic component, a button atomic component, an image atomic component, and the like. Since the atomic components can be reused, one of each type of atomic component may be deployed, and a plurality of element components of the same type may also be deployed.

The first atomic component may be at least one atomic component configured to render at least one interface element. After the view structure is obtained, the atomic component configured to render each interface element is determined through the interface elements represented by the view structure, and at least one atomic component capable of rendering at least one interface element is obtained as the first atomic component.

For example, suppose there are two interface elements in total: interface element 1 and interface element 2. Since the element property information can represent the types of the interface elements, it can be determined through the element property information that interface element 1 therein is rendered by a text atomic component, and interface element 2 is rendered by an image atomic component; then the first atomic component includes a text atomic component and an image atomic component.

For instance, assume that the view structure indicates the display condition of a plurality of interface elements in a form, and the plurality of interface elements include an input box, a submit button and information prompts in the form. In this case, the element property information of the interface elements is read to determine that the input box (configured to complete text input, password input, and the like) corresponds to text atomic component 1, the submit button (configured to trigger) corresponds to a button atomic component, and the prompt information (configured to display text and receive a trigger) corresponds to text atomic component 2, and the like.

The second rendering engine may determine a first native component in the native framework that corresponds to the first atomic component based on a correspondence relationship between an atomic component configured in the browser framework and a native component configured in the native framework.

For example, atomic components are components deployed in the application and invoked by the first rendering engine to render interface elements in the browser interface. The correspondence relationship between the atomic components corresponding to the browser framework and the native components corresponding to the native framework may be a one-to-one correspondence relationship; for example, a text atomic component corresponds to a text native component, a button atomic component corresponds to a button native component, and the like.

Therefore, after the first atomic component configured to render the interface element is determined through the view structure, at least one native component may be determined as the first native component through the first atomic component.

The second rendering engine may render the second interface element by the first native component, and display the second interface element in the native interface.

For example, the view structure represents the relative display condition between the plurality of interface elements; therefore, the native framework may render at least one interface element under the condition of conforming to the view structure through the first native component corresponding to the first atomic component, so as to display the second interface element including at least one interface element in the native interface.

In the process of the second rendering engine invoking the first native component to render the plurality of interface elements through the view structure, the native technology corresponding to the native framework is adopted; therefore, although the second interface element displayed in the native interface is rendered and displayed as an interface element provided with the assistance of the browser framework, it has stronger stability.

The foregoing is only an example, and this is not limited in this disclosure.

In summary, even if the browser interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing a more efficient good feedback to the user on the premise of helping ensure a smooth interface transition effect.

In one or more embodiments of this disclosure, content is described regarding the first rendering engine generating a render tree and obtaining a view structure based on the interface jump operation to transmit to the second rendering engine. The first rendering engine is a rendering engine corresponding to the browser framework, capable of determining the interface element based on the interface jump operation and implementing a real-time construction process of the render tree, and generating a render tree with stronger timeliness, so that the view structure can reflect the latest condition of the webpage to the greatest extent, and can also more properly express the interface hierarchical condition of the interface element, thereby improving the standardization degree of the rendering instruction. The rendering instruction including the view structure is transmitted to the second rendering engine, so that the second rendering engine implements a more standardized and targeted rendering process on the native interface based on the view structure, making the rendering process of the second interface element timelier and more stable, and improving the use experience of the user using the application.

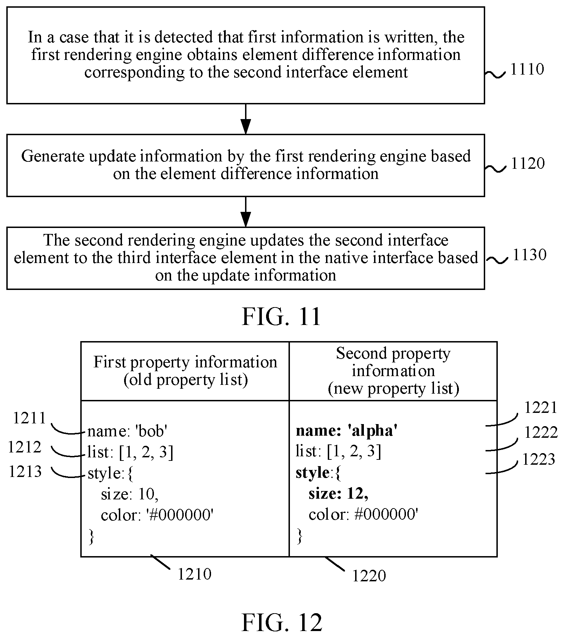

In a case that the first rendering engine identifies that first information is written (e.g., when writing of first information is deleted by the first rendering engine), the first rendering engine obtains element difference information respectively corresponding to a plurality of interface elements and generates update information, so as to, after a second interface element is displayed in a native interface, prompt the second rendering engine to update the displayed second interface element in time based on the update information transmitted by the first rendering engine, to a third interface element. For example, as shown in FIG. 11, one or more embodiment illustrated with reference to FIG. 2 may further include the following operation 1110 to operation 1130.

Operation 1110: In a case that it is detected that first information is written, the first rendering engine obtains element difference information corresponding to the second interface element.

For example, the first information is information written to a webpage link. If the first rendering engine detects that new first information is written to the webpage link and the second interface element needs to be updated, the first rendering engine may analyze at least one interface element included in the second interface element to obtain element difference information respectively corresponding to the at least one interface element.

When the interface element has not changed, it can be considered that there is no element difference information or the element difference information is 0. When an interface element has a change, differences between property information corresponding to the original interface element and property information corresponding to the new interface element are analyzed, and the element difference information corresponding to the interface element is determined.

The element difference information is configured to represent the influence of the first information on the interface element. The element difference information represents at least one of a subordination difference between a plurality of interface elements and an information difference corresponding to element property information.

The element difference information includes at least one of various types of information representing changes, such as element property change information, element deletion information, element addition information and element hierarchy change information.

The element property change information indicates a change in element property information of an interface element, such as a style change, a font change, and the like. The element deletion information indicates a case where an interface element is deleted. The element addition information indicates a case where an interface element is added. The element hierarchy change information indicates hierarchy changes between interface elements. The element deletion information, the element addition information, and the element hierarchy change information can be collectively referred to as subordination differences between a plurality of interface elements.

In a case that the first rendering engine detects that the first information is written (e.g., when writing of first information is detected by the first rendering engine), preview data (second property information of the third interface element) corresponding to the second interface element is obtained, where the second interface element corresponds to the first property information, and the preview data includes the second property information of the second interface element, which is generated by simulating the influence of the first information writing after the first information is written and contains an expected rendering effect.

The third interface element (simulated update result) is an interface element after the first information changes, and the simulated update result may be the same as the second interface element, or there may be differences. That is, the second interface element and the simulated update result indicate the same interface element before and after the first information is written; when the first information does not affect the display of the second interface element, the second interface element is the same as the simulated update result. When the first information affects the display of the second interface element, there is a difference between the second interface element and the simulated update result.

The second interface element corresponds to the first property information, and the preview data includes second property information of the simulated update result (third interface element) of the second interface element after the first information is written. The first property information is information of the interface element (second interface element) before the first information is written, and the second property information is information of the interface element (third interface element) after the first information is written.

The element difference information corresponding to the second interface element is generated based on a difference between the first property information and the second property information.

The difference between the first property information and the second property information includes a difference in at least one of a string type dimension, a list dimension, and an element style dimension. Therefore, the element difference information corresponding to the second interface element can be obtained from at least one of the string type dimension, the list dimension, and the element style dimension.

The string type dimension is configured to obtain name information of atomic components of the rendered interface element. The list dimension is configured to obtain the subordination of the interface element. The element style dimension is configured to indicate the display style of the interface element on the interface. In a case that one atomic component corresponds to one interface element, the string type dimension is configured to obtain name information of the atomic component, the list dimension is configured to obtain the subordination of the atomic component, and the element style dimension is configured to obtain the display style of the atomic component on the interface.

The element difference information corresponding to the second interface element is obtained based on at least one of a first comparison result obtained from the string type dimension, a second comparison result obtained from the list dimension, and a third comparison result obtained from the element style dimension.

For example, after obtaining the string type identifier, list information, and element style corresponding to the second interface element and the simulated update result (third interface element) respectively, the same information is horizontally compared to obtain element property differences.

As shown in FIG. 12, first property information 1210 (old property list) corresponding to the second interface element and second property information 1220 (new property list) corresponding to the third interface element are shown. The first property information 1210 includes a first string type identifier 1211, first list information 1212, and a first element style 1213. The second property information 1220 includes a second string type identifier 1221, second list information 1222, and a second element style 1223.

The manner for obtaining the first comparison result includes: obtaining a first string type identifier corresponding to the second interface element from the first property information; obtaining a second string type identifier of the third interface element (simulated update result of the second interface element after the first information is written) from the second property information; and obtaining the first comparison result based on a difference between the first string type identifier and the second string type identifier.

The first string type identifier indicates a component identifier of an atomic component that renders the second interface element, and the second string type identifier indicates a component identifier of an atomic component that renders the third interface element (simulated update result).

For example, when comparing the first string type identifier and the second string type identifier, since the string type identifier represents the name of the atomic component used when rendering the interface element, if the first string type identifier and the second string type are the same, it is determined that the string type identifier dimension has not changed. If the first string type identifier and the second string type are different, it is determined that the string type identifier dimension has changed. As shown in FIG. 12, the first string type identifier 1211 is different from the second string type identifier 1221 (shown in bold). In a case that the first string type identifier and the second string type identifier are different, first difference information is generated.

The manner for obtaining the second comparison result includes: obtaining first list information corresponding to the second interface element from the first property information; obtaining second list information corresponding to the third interface element (simulated update result) from the second property information; and obtaining the second comparison result based on a difference between the first list information and the second list information.

The first list information indicates subordinate interface elements belonging to the second interface element. The second list information indicates subordinate interface elements belonging to the third interface element (simulated update result).

For example, when comparing the first list information and the second list information, since the list information indicates the subordinate relationship between interface elements, if there is at least one piece of different information in the first list information and the second list information (that is, there are differences in the subordinate sub-elements), it is determined that the list information dimension has changed. As shown in FIG. 12, the first list information 1212 is the same as the second list information 1222. In a case that the interface elements indicated by the first list information as belonging to the second interface element are different from the interface elements indicated by the second list information as belonging to the third interface element, second difference information is generated. The second difference information includes at least one of a different quantity of subordinate elements and different values of subordinate elements.

The manner for obtaining the third comparison result includes: obtaining a first element style corresponding to the second interface element from the first property information, obtaining a second element style corresponding to the third interface element (simulated update result) from the second property information, and obtaining the third comparison result based on a difference between the first element style and the second element style.

The first element style indicates a display style of the second interface element on the interface, and the second element style indicates a display style of the third interface element (simulated update result) on the interface.

For example, when comparing the first element style and the second element style, since the element style indicates a style change between interface elements, one element corresponds to at least one style, and each style corresponds to a property value. Therefore, if there is at least one different property value in the first element style and the second element style, it means that the element style dimension has changed, and third difference information is generated. As shown in FIG. 12, the second element style 1213 is different from the second element style 1223 (bold display).

At least one of the first comparison result, the second comparison result, and the third comparison result is integrated to generate element difference information corresponding to the second interface element, so as to represent property differences analyzed in terms of string type dimension, list dimension, and element style dimension.

Operation 1120: Generate update information by the first rendering engine based on the element difference information.

For example, element difference information corresponding to at least one interface element included in the second interface element is obtained, where some interface elements may correspond to element difference information, meaning that the first information causes changes to these interface elements, while other interface elements do not correspond to element difference information or the element difference information is zero. Alternatively, if the first information causes changes to all interface elements, then multiple interface elements all correspond to non-zero element difference information, and so on.

Based on the element difference information corresponding to at least one interface element, the first rendering engine can generate update information, where the update information instructs the second rendering engine to update the display status of the interface element.

For example, the update information includes at least one of element addition information, element deletion information, and property update information, where the element addition information indicates newly added interface elements, the element deletion information indicates deleted interface elements, and the property update information indicates property changes of interface elements (such as style changes, font changes, position changes, and the like).

Operation 1130: The second rendering engine updates the second interface element to the third interface element in the native interface based on the update information.

For example, the first rendering engine transmits update information to the second rendering engine, where the update information includes interface elements that have changed. The second rendering engine adjusts the display status of at least one changed interface element in the second interface element within the native interface based on the update information, thereby displaying the third interface element. The third interface element has changes in the display status of at least one interface element compared to the second interface element, such as changes in the style of the interface element, changes in the font of the interface element, and the like, which are not limited here.

The update information for property changes can be defined as a set of instructions. When the quantity of instructions reaches a specific amount, or when a render tree finishes an update, this set of instructions is serialized and passed to the second rendering engine on the native side (the runtime environment of the native framework) using JavaScript Bridge.

The definition of instruction types and their parameters includes at least one of the following.
(1) Creating an interface element: When creating an interface element, a unique component identifier for the atomic component configured to render the interface element and initial element property information (that is, element addition information in the element difference information) are determined;
(2) Adding a child node: At least one of the element identifier corresponding to the parent element of the interface element and the element identifier corresponding to the child element needs to be included (that is, element hierarchy change information in the element difference information);
(3) Deleting a child node: At least one of the element identifier corresponding to the parent element of the interface element and the element identifier corresponding to the child element needs to be included (that is, element deletion information in the element difference information); and
(4) Updating properties: The element identifier of the interface element and partial element property information with differences, and the like (that is, element property change information in the element difference information) need to be included.

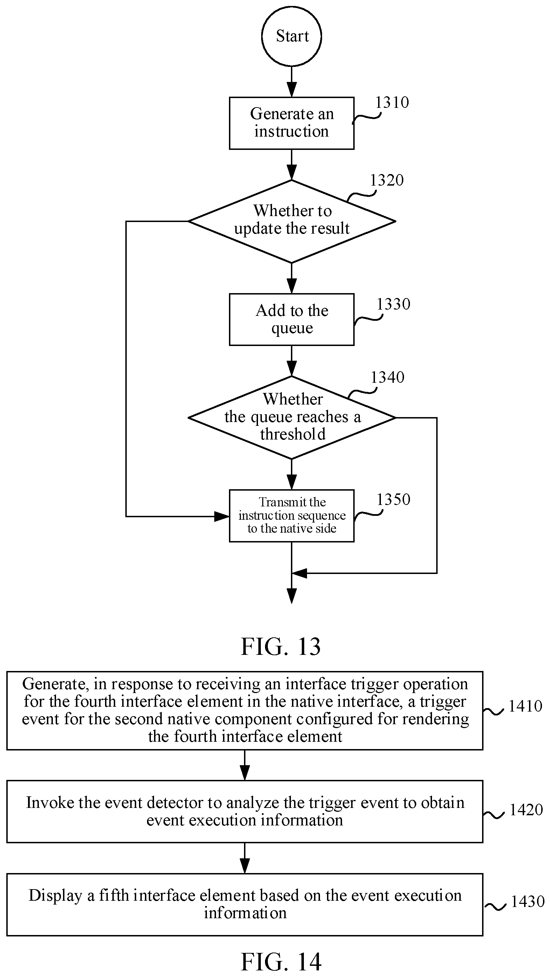

As shown in FIG. 13, taking the update information implemented as an instruction sequence as an example, the process of transmitting the instruction sequence to the native side includes the following operations.

Operation 1310: Generate an instruction.

For example, update information with changed properties is defined as instructions, and a plurality of instructions representing the update information are obtained.

Operation 1320: Whether the update ends.

For example, if the render tree has not finished updating, operation 1330 is performed. If the render tree has finished updating, and the instruction sequence transmitting process is not performed according to a specific quantity of conditions reached by the instructions, operation 1350 is performed.

Operation 1330: Add to the queue.

For example, if the render tree has not finished updating, instructions are added to the queue to obtain an instruction sequence.

Operation 1340: Whether the queue reaches a threshold.

For example, if the instruction sequence transmitting process is performed based on a specific quantity of instructions in the instruction sequence, and the quantity of instructions in the current instruction sequence reaches a preset threshold, operation 1350 is performed. If the quantity of instructions in the instruction sequence does not reach the preset threshold, the process ends.

Operation 1350: Transmit the instruction sequence to the native side.

For example, an instruction sequence representing update information is transmitted to the native side, so that the native side updates the second interface element to the third interface element in the native interface based on the instruction sequence. For example, the instruction sequence is transmitted to a second rendering engine under a native framework, so that the second rendering engine updates the second interface element to the third interface element in the native interface.

The foregoing is an example, and this is not limited in this disclosure.

In summary, even if the browser interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing more efficient feedback to the user on the premise of helping ensure a smooth interface transition effect.

In embodiments of this disclosure, a process of generating update information based on element difference information to quickly update the second interface element is described. In a case that there is a first information writing operation on the webpage, the element difference information corresponding to the interface elements is analyzed, so as to generate update information based on the comprehensive element difference information, so that the second rendering engine receives the update information transmitted by the first rendering engine to realize the update display process of the interface elements. This process fully utilizes the flexibility of the browser framework, and timely adjusts the display of interface elements while stably displaying interface elements based on the native interface, improving the timeliness and accuracy of updating the second interface element, and enhancing the flexibility of content display.

In a case that the fourth interface element (such as the second interface element or the third interface element mentioned above) is displayed in the native interface, if an interface trigger operation for the fourth interface element is received, since the fourth interface element is rendered and controlled by the native framework under the guidance of the browser framework, the native framework needs to generate a trigger event after receiving the interface trigger operation in the native interface. Therefore, the trigger event transmitted by the native framework needs to be analyzed through the browser framework, so as to display the fifth interface element based on the analyzed event execution information. For example, as shown in FIG. 14, the method included in one or more embodiments of this disclosure may further include the following operations 1410 to 1430.

Operation 1410: Generate, in response to receiving an interface trigger operation for the fourth interface element in the native interface, a trigger event for the second native component configured to render the fourth interface element.

The trigger event includes at least one of a native component identifier of the second native component, an event name of the interface trigger operation, and operation data corresponding to the interface trigger operation.

For example, in a case that the fourth interface element (such as the second interface element or the updated third interface element) is displayed in the native interface, if the fourth interface element in the native interface receives an interface trigger operation such as a tap operation or a long-press operation, a trigger event is generated by the second native component corresponding to the fourth interface element.

Since the fourth interface element displayed in the native interface is assisted by the browser framework, the native framework cannot independently determine the change of the interface element based on the interface trigger operation. After the native interface receives the interface trigger operation, according to the fourth interface element targeted by the interface trigger operation, the second native component that receives the interface trigger operation under the native framework is determined, so that the second native component determines at least one of the native component identifier of the second native component, the event name of the interface trigger operation, and the operation data corresponding to the interface trigger operation, and generates a trigger event and transmits it to the browser framework, so that the browser framework determines how the fourth interface element changes.

That is, the trigger event includes at least one of the native component identifier of the second native component targeted by the interface trigger operation, the event name of the interface trigger operation, and the operation data corresponding to the interface trigger operation.

For example, an interface trigger operation may target at least one interface element displayed in the native interface. Since an interface element is rendered by at least one native component, the native component configured to render the interface element can be determined as the second native component according to the interface element targeted by the interface trigger operation, and the component identifier of the second native component is determined, where the component identifier is configured to uniquely represent the second native component.

For example, an interface trigger operation corresponds to an operation event, and the operation event indicates the event name triggered by the interface trigger operation. The operation event can be various types such as tapping control A, sliding the screen, single-tapping the left mouse button, double-tapping the right mouse button, and is not limited here.

For example, the operation data indicates data information inputted by the interface trigger operation. For example, if the interface trigger operation is to input a segment of text in an input box, the operation data includes the segment of text; or if the interface trigger operation is to upload an image, the operation data includes the image, and is not limited here.

The second native component can be invoked to transmit the trigger event to an event dispatcher, and the trigger event is transmitted to an event detector through the event dispatcher.

For example, an event dispatcher is deployed on the native side corresponding to the native framework, and the event dispatcher is configured to interact with an event detector under the browser framework to transmit the generated trigger event to the event detector.

Operation 1420: Invoke the event detector to analyze the trigger event to obtain event execution information.

The event detector analyzes the trigger event to obtain event execution information after the trigger event is executed, and the event execution information indicates a response result to the interface trigger operation.

Based on the event name and native component identifier in the trigger event, the event detector can determine a first response behavior that matches the event name and the native component identifier.

The event detector can analyze the received trigger event to parse out the event name and the native component identifier therefrom, so as to query and determine the first response behavior based on the event name and the native component identifier.

The event detector can obtain a behavior invoking table, where the behavior invoking table is stored in the form of key-value pairs, where the value is the response behavior, and the key is the atomic component identifier and event name configured to implement the response behavior. In some examples, the behavior invoking table may include one or more key-value pairs, a value of a key-value pair indicating a corresponding response behavior, and a key of the key-value pair indicating a corresponding atomic component identifier and a corresponding event name usable to implement the corresponding response behavior.

For example, the behavior invoking table is bound to the event detector, where at least one atomic component identifier and one event name serve as keys, and the behavior completed through the at least one atomic component identifier and one event name is the response behavior, and the response behavior serves as the value, so that a unique response behavior can be determined based on the atomic component identifier and the event name.

The event detector can be invoked to query the behavior invoking table based on the event name and the native component identifier to obtain a first response behavior matching the event name and the native component identifier.

For example, the event name and the native component identifier can be used as query keys to query the behavior invoking table, and a response behavior matching the event name and the native component is obtained as the first response behavior.

Based on the correspondence between atomic components and native components, the first response behavior can be simulated through a second atomic component corresponding to the second native component, and event execution information can be generated.

For example, based on the correspondence between native components and atomic components, the corresponding second atomic component can be determined based on the second native component under a browser framework, and the second atomic component can be invoked to complete the first response behavior conforming to the event name, such as "jump to interface A to display P information", which is not limited here.

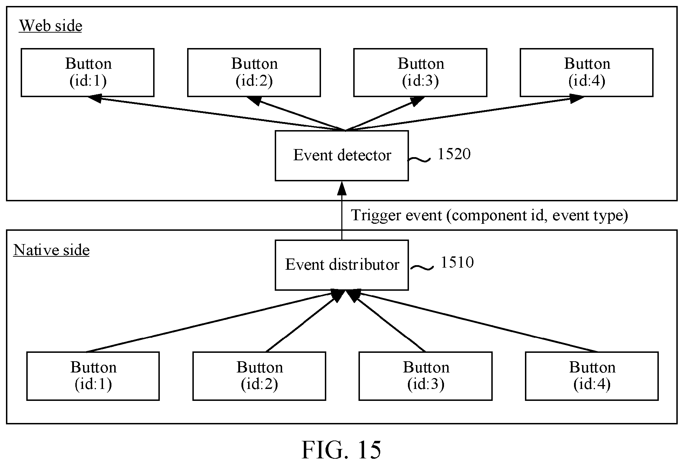

As shown in FIG. 15, the content of the event notification process implemented based on the event dispatcher and the event detector is described.

An event dispatcher 1510 is deployed on the native side, the native side may refer to the content and functions deployed inside the application, the native side can be understood as the execution environment corresponding to the native framework, and the event dispatcher 1510 is a component deployed on the native side for dispatching trigger events. An event detector 1520 is deployed on the web side, the web side can be understood as the execution environment corresponding to the browser framework, and the event detector 1520 is a component configured to obtain trigger events to analyze the trigger events.

During the process of invoking the first rendering engine to execute virtual rendering through atomic components based on the interface jump operation, the event names corresponding to the events that can be realized by the atomic components are analyzed, and the atomic component identifier and the event name are used as keys in key-value pairs, and the response behavior that can be realized by the atomic component and the event name is used as the value in the key-value pairs, to construct a behavior invoking table, and the behavior invoking table is transmitted to the event detector 1520 on the web side, so as to bind the behavior invoking table with the event detector 1520 on the web side.

When an interface trigger operation is received on the native interface, the interface element (fourth interface element) indicated by the interface trigger operation can be analyzed on the native side, and at least one of the native component identifier of second native component, the operation event, and the operation data corresponding to the interface element can be determined, so as to generate a trigger event, for example, the native framework invokes the native component to generate a trigger event. Then, the trigger event is transmitted to the event dispatcher 1510.

The event dispatcher 1510 callbacks the event to the event detector 1520 on the web side through JavaScript Bridge, and the event detector analyzes and determines at least one of the native component identifier, the operation event, and the operation data based on the behavior invoking table, so as to determine the atomic component identifier of the second atomic component corresponding to the second native component based on the native component identifier, and determine the first response behavior based on the atomic component identifier and the event name, thereby executing the first response behavior to generate event execution information.

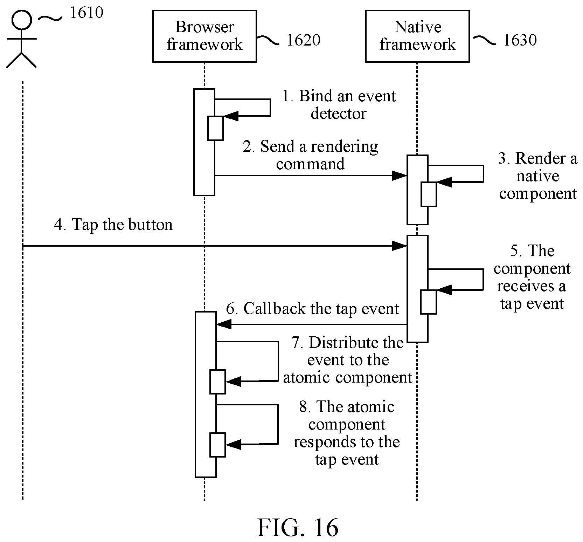

As shown in FIG. 16, the event notification process executed by the browser framework 1620 and the native framework 1630 is described as follows.

The browser framework 1620 first binds the behavior invoking table with the event detector on the web side, and notifies the native framework 1630 to render the native component (that is, render and display the second interface element in the native interface based on the native component). Then, when the user 1610 performs an interface trigger operation (such as tapping a button) in the native interface, the native component of the native framework 1630 generates a trigger event (such as a tap event) and then transmits the trigger event to the event detector of the browser framework 1620 through the event dispatcher, thereby determining the first response behavior through the behavior invoking table. Thereafter, the event detector can invoke the first rendering engine to perform the first response behavior (such as responding to a tap event) using the atomic component, thereby obtaining event execution information.

Operation 1430: Display a fifth interface element based on the event execution information.

When the event execution information indicates execution by the native framework, the browser framework transmits the event execution information to the native framework, thereby invoking the native framework to render the event execution information and display the fifth interface element; alternatively, if the event execution information indicates execution by the browser framework, the browser framework renders the event execution information and displays the fifth interface element, and the like, which is not limited here.

The fifth interface element is an interface element displayed within the native interface. Alternatively, the fifth interface element is an interface element displayed in other interfaces outside the native interface, such as a previous browser interface, other browser interfaces, other native interfaces, and the like, which is not limited here.

For example, the native framework invokes the second rendering engine to perform rendering and restoration through native components according to the view structure, and parses property information and responds to changes.

The second rendering engine can be designed in a state-responsive mode, where each native component invoked by the second rendering engine corresponds to a model (Model), and the model records the child node relationships and property information (equivalent to a state) of the current native component.

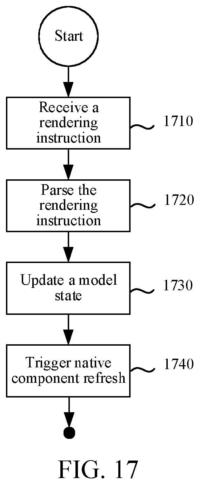

As shown in FIG. 17, a flowchart of the native framework invoking the second rendering engine to perform rendering is described.

Operation 1710: Receive a rendering instruction.

For example, the second rendering engine of the native framework receives a rendering instruction transmitted by the first rendering engine of the browser framework.

Operation 1720: Parse the rendering instruction.

For example, the native framework invokes the second rendering engine to parse the rendering instruction to determine the rendering situation of the interface element rendered by the native component.

Operation 1730: Update a model state.

For example, if the parsing result indicates updating the model state of the corresponding native component, for example, if the received rendering instruction is an instruction sequence indicating update information, the model updates the child node relationships and property information according to the rendering instruction and generates a new state, which can be regarded as adjusting at least one interface element in the second interface element based on the update information. If an interface element corresponds to a native component, the model state of the native component corresponding to the interface element is adjusted based on the interface element affected by the update information.

Operation 1740: Trigger native component refresh.

For example, by triggering the refresh of the native component, the native component renders the interface element to the screen according to the latest model state, thereby displaying the interface element with timely updated information.

The foregoing is only an example, and this is not limited in this disclosure.

In summary, even if the browser interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing a more efficient good feedback to the user on the premise of helping ensure a smooth interface transition effect.

In one or more embodiments of this disclosure, considering that the interface elements displayed in the native interface are displayed with the assistance of the browser framework, the native framework does not independently determine the change of the interface elements based on the interface trigger operation. A trigger event is generated based on the interface trigger operation received by the native interface and transmitted to an event detector of the browser framework, so that the event detector invokes a relative atomic component to perform a first response behavior, and the fifth interface element is rendered and displayed by a corresponding framework based on the indication of the event execution information, thereby improving the flexibility of interface display.

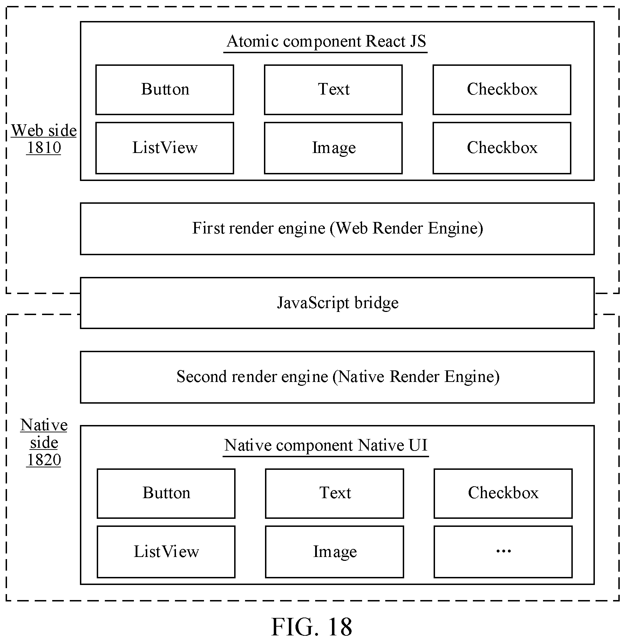

The overall structure of the interface rendering technology for implementing the user interface rendering method based on React technology is described. As shown in FIG. 18, it is a schematic diagram of the overall architecture for executing the user interface rendering method.

The web side 1810 includes an open-source JavaScript library for building user interfaces (React JS), and React JS on the web side 1810 provides atomic components corresponding one-to-one with native components on the native side 1820, such as button atomic components, text atomic components, list atomic components, and the like. Web developers use these atomic components to implement, or encapsulate and implement, higher-order components based on these atomic components.

The first rendering engine on the web side 1810 (Web Render Engine) is a rendering engine on the web side, configured to parse properties and hierarchical relationships of React atomic components, and binding various callback behaviors.

The web side 1810 and the native side 1820 achieve communication connection through JavaScript Bridge. The communication channel between the web side 1810 and the native side 1820 can not only transmit the parsing result (view structure) of the first rendering engine of the web side 1810 to the native side 1820, but also transmit the tap behavior of the native side 1820 to the web side 1810.

The second rendering engine on the native side 1820 (Native Render Engine) is configured to receive the view structure transmitted by the first rendering engine of the web side 1810 transmitted by the JavaScript Bridge, and rendering the real view on the native side 1820 according to this view structure.

The native side 1820 includes native components, and atomic components corresponding to React JS implemented on the native side 1820 are provided to developers on the web side 1810 for the rendering engine of the native side 1820 to invoke to render pages.

The foregoing is an example, and this is not limited in this disclosure.

In summary, even if the browser interface is currently displayed, a native interface with better stability may still be created in response to the interface jump operation. On the premise that the native interface is adapted to the application itself, the second interface element obtained through the webpage address based on the interface jump operation is rendered on the native interface, which not only brings into play the advantage of the display stability of the native interface, but also enables obtaining a second interface element with stronger timeliness through the webpage address, thereby facilitating providing more efficient feedback to the user on the premise of helping ensure a smooth interface transition effect.

In embodiments of this disclosure, a solution of hybrid rendering of a native framework and a browser framework is adopted to achieve a native experience based on React development. The architecture of mixing the native framework and the browser framework allows developers to quickly iterate and update pages without relying on the release and update of applications with longer cycles, which is important for quickly responding to market changes and user feedback. In addition, the use of atomic components in the browser framework allows the code under the browser framework to be reused by the native framework as much as possible, reducing development costs.

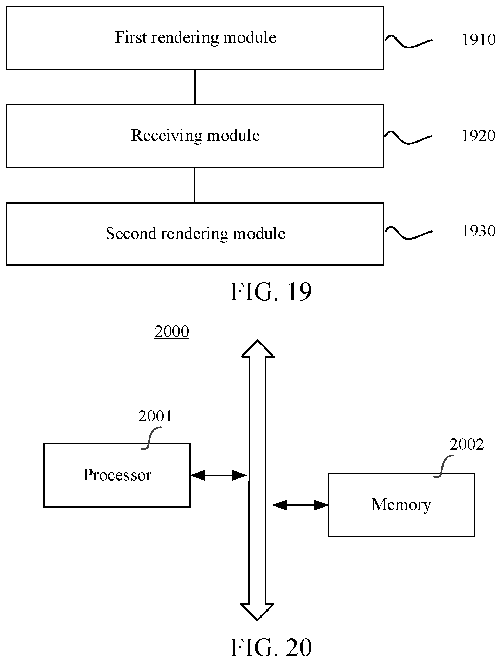

FIG. 19 is a structural block diagram of a user interface rendering apparatus according to an embodiment of this disclosure. As shown in FIG. 19, the apparatus includes the following parts:
a first rendering module 1910, configured to display a first user interface of an application, the first user interface being created and rendered through a browser framework deployed within the application, and the first user interface including a first interface element obtained based on a webpage address;
a receiving module 1920, configured to receive an interface jump operation, the interface jump operation triggering jumping from the currently displayed first user interface to a second user interface of the application to display a second interface element; and
a second rendering module 1930, configured to create and render, in response to the interface jump operation, the second user interface through a native framework of the application, the second user interface including the second interface element dynamically obtained through the browser framework based on the webpage address.

The user interface rendering apparatus provided in the foregoing embodiments is illustrated with an example of division of the foregoing functional modules. In actual application, the functions may be allocated to and completed by different functional modules according to requirements, that is, the internal structure of the device is divided into different functional modules, to implement all or some of the functions described above. In addition, the user interface rendering apparatus described in one or more foregoing embodiments and the user interface rendering method according to the present disclosure correspond to the same or similar concept. For a specific implementation process, refer to one or more method embodiments described above, and the details are not described herein again.

FIG. 20 is a structural block diagram of an electronic device 2000 according to an embodiment of this disclosure. The electronic device 2000 may be a portable mobile terminal, for example, a smartphone, an in-vehicle terminal, a tablet computer, a Moving Picture Experts Group Audio Layer III (MP3) player, a Moving Picture Experts Group Audio Layer IV (MP4) player, a laptop computer, or a desktop computer. The electronic device 2000 may also be referred to as another name such as user equipment, a portable terminal, a laptop terminal, or a desktop terminal.

The electronic device 2000 may include processing circuitry (e.g., a processor 2001) and a memory 2002.

The processor 2001 may include one or more processing cores, for example, a 4-core processor or an 8-core processor. The processor 2001 may be implemented in at least one hardware form of a digital signal processor (DSP), a field-programmable gate array (FPGA), and a programmable logic array (PLA). The processor 2001 may alternatively include a main processor and a coprocessor. The main processor is configured to process data in an active state, also referred to as a central processing unit (CPU). The coprocessor is a low-power processor configured to process data in a standby state. The processor 2001 may be integrated with a graphics processing unit (GPU). The GPU is configured to render and draw content that needs to be displayed on a display. In some embodiments, the processor 2001 may further include an artificial intelligence (AI) processor. The AI processor is configured to process a computing operation related to machine learning.

The memory 2002 may include one or more computer-readable storage media that may be non-transitory. The memory 2002 may further include a high-speed random access memory and a nonvolatile memory, for example, one or more disk storage devices or flash storage devices. A non-transitory computer-readable storage medium in the memory 2002 is configured to store at least one instruction, the at least one instruction being configured to be executed by the processor 2001 to implement the user interface rendering method provided in the method embodiments of this disclosure.

The electronic device 2000 further includes one or more sensors. The one or more sensors include, but are not limited to: a proximity sensor, a gyroscope sensor, and a pressure sensor.

The proximity sensor, also referred to as a distance sensor, may bedisposed on a front panel of the electronic device 2000. The proximity sensor is configured to collect a distance between the user and the front surface of the electronic device 2000.

The gyroscope sensor may detect a body direction and a rotation angle of the electronic device 2000, and the gyroscope sensor may work with the acceleration sensor to collect a 3D action performed by the user on the electronic device 2000. The processor 2001 may implement the following functions according to the data obtained by the gyroscope sensor: motion sensing (such as changing the UI according to a tilt operation of the user), image stabilization at shooting, game control, and inertial navigation.

The pressure sensor may be disposed at a side frame of the electronic device 2000 and/or a lower layer of the display screen. When the pressure sensor is disposed at the side frame of the electronic device 2000, a holding signal of the user on the electronic device 2000 may be detected. The processor 2001 performs left/right hand recognition or a quick operation according to the holding signal obtained by the pressure sensor. When the pressure sensor is disposed on the low layer of the display screen, the processor 2001 controls, according to a pressure operation of the user on the display screen, an operable control on the UI. The operable control includes at least one of a button control, a scroll-bar control, an icon control, and a menu control.

The electronic device 2000 further includes other components. The structure shown in FIG. 20 does not constitute a limitation on the electronic device 2000 and the electronic device 2000 may include more or fewer components than those shown in the figure, a combination of some components, or different component arrangements.

The embodiments of this disclosure further provide a computer device, which can be implemented as a terminal or a server as shown in FIG. 2. The computer device includes a processor and a memory. The memory has at least one instruction, at least one segment of program, a code set, or an instruction set stored therein, and the at least one instruction, the at least one segment of program, the code set, or the instruction set is loaded and executed by the processor to implement the user interface rendering method according to the foregoing method embodiments.

An embodiment of this disclosure further provides a computer-readable storage medium, having at least one instruction, at least one segment of program, a code set, or an instruction set stored therein, and the at least one instruction, at least one segment of program, code set, or instruction set being loaded and executed by a processor to implement the user interface rendering method provided in the foregoing method embodiments.

An embodiment of this disclosure provides a computer program product or a computer program. The computer program product or the computer program includes computer instructions, and the computer instructions are stored in a computer-readable storage medium. A processor of a computer device reads the computer instructions from the computer-readable storage medium and executes the computer instructions, to enable the computer device to perform the user interface rendering method according to any one of the foregoing embodiments.

The computer-readable storage medium may include: a read-only memory (ROM), a random access memory (RAM), a solid state drive (SSD), an optical disc, or the like. The RAM may include a resistance random access memory (ReRAM) and a dynamic random access memory (DRAM). The sequence numbers of the foregoing embodiments of this disclosure are for description purpose but do not imply the preference among one or more embodiments.

All or some of the operations of the foregoing embodiments may be implemented by hardware, or may be implemented by a program instructing related hardware. The program may be stored in a computer-readable storage medium. The storage medium may be a ROM, a magnetic disk, or an optical disc. The foregoing descriptions are merely embodiments of this disclosure, but are not intended to limit this disclosure. Any modification, equivalent replacement, or improvement made within the spirit and principle of this disclosure shall fall within the protection scope of this disclosure.

## Claims

1. A user interface rendering method, performed by an electronic device, the method comprising:
displaying a first user interface of an application, the first user interface being rendered through a browser framework deployed within the application, and the first user interface comprising a first interface element obtained using a webpage address;
receiving an interface jump operation for triggering jumping from the first user interface to a second user interface of the application to display a second interface element; and
creating and rendering the second user interface through a native framework of the application based on the interface jump operation, the second user interface comprising the second interface element dynamically obtained through the browser framework using the webpage address.

2. The method according to claim 1, wherein the browser framework is a program framework embedded within the application other than the native framework; and the native framework is a program framework on which development of the application is based.

3. The method according to claim 1 or 2, wherein the browser framework comprises a first rendering engine, and the native framework comprises a second rendering engine; and
the method further comprises:
obtaining, after the second user interface is created through the native framework, an interface identifier corresponding to the second user interface by the first rendering engine;
transmitting a rendering instruction to the second rendering engine from the first rendering engine, the rendering instruction comprising the interface identifier and the second interface element; and
rendering the second interface element on the second user interface by the second rendering engine based on the rendering instruction.

4. The method according to claim 3, wherein before transmitting the rendering instruction to the second rendering engine, the method further comprises:
determining, by the first rendering engine, the second interface element indicated by the interface jump operation from a plurality of interface elements of a webpage corresponding to the webpage address, and constructing a render tree corresponding to the second interface element, the render tree comprising a render node corresponding to the second interface element; and
generating, by the first rendering engine, the rendering instruction comprising a view structure, the view structure comprising the render tree.

5. The method according to claim 4, wherein before transmitting the rendering instruction comprising the view structure, the method further comprises:
analyzing, by the first rendering engine, element property information and a hierarchical relationship that correspond to the render node in the render tree, to generate layout information, the layout information being included in the view structure and indicating a layout feature of the second interface element.

6. The method according to claim 4, wherein the rendering the second interface element on the second user interface by the second rendering engine based on the rendering instruction comprises:
invoking the second rendering engine to render the second interface element on the second user interface based on the view structure.

7. The method according to claim 6, wherein the invoking the second rendering engine to render the second interface element on the second user interface based on the view structure comprises:
invoking the second rendering engine to determine, from the view structure, a first atomic component in the browser framework that corresponds to rendering the second interface element;
determining a first native component in the native framework that corresponds to the first atomic component by the second rendering engine; and
invoking the second rendering engine to render the second interface element based on the first native component.

8. The method according to any one of claims 3 to 7, further comprising:
invoking, the first rendering engine to obtain element difference information corresponding to the second interface element when writing of first information is detected by the first rendering engine, the element difference information indicating a change of the second interface element before and after the first information is written;
generating update information by the first rendering engine based on the element difference information; and
after the displaying the second user interface of the application, the method further comprises:
invoking the second rendering engine to update the second interface element on the second user interface to a third interface element based on the update information.

9. The method according to claim 8, wherein the invoking the first rendering engine to obtain the element difference information comprises:
obtaining second property information of the third interface element when writing of the first information is detected by the first rendering engine; and
generating the element difference information corresponding to the second interface element based on a difference between first property information of the second interface element and the second property information.

10. The method according to claim 9, wherein the difference between the first property information of the second interface element and the second property information comprises a difference in at least one of a character string type dimension, a list dimension, and an element style dimension; and
the generating the element difference information corresponding to the second interface element based on the difference between the first property information of the second interface element and the second property information comprises one or more of:
obtaining a first comparison result with respect to the character string type dimension based on obtaining a first character string type identifier corresponding to the second interface element from the first property information, obtaining a second character string type identifier of the third interface element from the second property information, and obtaining the first comparison result based on a difference between the first character string type identifier and the second character string type identifier; and
obtaining a second comparison result with respect to the list dimension based on obtaining first list information corresponding to the second interface element from the first property information, obtaining second list information of the third interface element from the second property information, and obtaining the second comparison result based on a difference between the first list information and the second list information; and
obtaining a third comparison result with respect to the element style dimension based on obtaining a first element style corresponding to the second interface element from the first property information, obtaining a second element style of the third interface element from the second property information, and obtaining the third comparison result based on a difference between the first element style and the second element style.

11. The method according to any one of claims 1 to 7, wherein
the second user interface and the first user interface have a jump link relationship indicating that the second user interface is at a next jump node of the first user interface in an interface flow.

12. The method according to any one of claims 1 to 11, wherein the browser framework comprises an event detector; and
after rendering the second user interface of the application, the method further comprises:
generating a trigger event for a second native component in the native framework that corresponds to rendering a fourth interface element when an interface trigger operation for the fourth interface element on the second user interface is received, the trigger event comprising at least one of a native component identifier of the second native component, an event name of the interface trigger operation, and operation data corresponding to the interface trigger operation;
invoking the event detector to analyze the trigger event to obtain event execution information, the event execution information indicating a response result to the interface trigger operation; and
displaying, through the native framework, a fifth interface element based on the event execution information.

13. The method according to claim 12, wherein the native framework comprises an event dispatcher; and
before invoking the event detector to analyze the trigger event to obtain the event execution information, the method further comprises:
invoking the second native component to transmit the trigger event to the event dispatcher; and
transmitting the trigger event to the event detector by the event dispatcher.

14. The method according to claim 12, wherein the invoking the event detector to analyze the trigger event to obtain the event execution information comprises:
determining, by the event detector based on the event name and the native component identifier that are in the trigger event, a first response behavior matching the event name and the native component identifier; and
simulating the first response behavior based on a second atomic component that corresponds to the second native component, to generate the event execution information.

15. The method according to claim 14, wherein the determining the first response behavior comprises:
obtaining a behavior invoking table by the event detector, the behavior invoking table comprising one or more key-value pairs, a value of a key-value pair indicating corresponding response behavior, and a key of the key-value pair indicating a corresponding atomic component identifier and a corresponding event name usable to implement the corresponding response behavior; and
invoking the event detector to query the behavior invoking table based on the event name and the native component identifier, to obtain the first response behavior matching the event name and the native component identifier.

16. The method according to any one of claims 1 to 15, wherein the second user interface comprises any one of the following:
a full-screen interface constructed by the native framework; or
a half-screen interface constructed by the native framework; or
a native window that is displayed on the first user interface and is constructed by the native framework.

17. A user interface rendering apparatus, the apparatus comprising:
a first rendering module, configured to display a first user interface of an application, the first user interface being created and rendered through a browser framework deployed within the application, and the first user interface including a first interface element obtained based on a webpage address;
a receiving module, configured to receive an interface jump operation, the interface jump operation triggering jumping from the first user interface to a second user interface of the application; and
a second rendering module, configured to create and render the second user interface through a native framework of the application based on the interface jump operation, the second user interface including a second interface element obtained by the browser framework based on the webpage address.

18. A computer device, the computer device comprising a processor and a memory, the memory having at least one segment of program stored therein, and the at least one segment of program being loaded and executed by the processor to implement the user interface rendering method according to any one of claims 1 to 16.

19. A computer-readable storage medium, the computer-readable storage medium having at least one segment of program stored therein, and the at least one segment of program being loaded and executed by a processor to implement the user interface rendering method according to any one of claims 1 to 16.

20. A computer program product, comprising computer instructions, the computer instructions, when executed by a processor, implementing the user interface rendering method according to any one of claims 1 to 16.
